# EUROPÄISCHE PATENTSCHRIFT

(11) **EP 3 630 431 B1**
(45) Veröffentlichungstag und Bekanntmachung des Hinweises auf die Patenterteilung: **11.09.2024**
(21) Anmeldenummer: 18726792.7
(22) Anmeldetag: 22.05.2018
(51) Int. Cl.: B27N 1/00, B27N 1/02, B08B 17/06, B27K 3/02, B27N 3/04, B65G 53/52, B65G 53/58

(54) **BELEIMUNGSEINRICHTUNG ZUM BELEIMEN VON PARTIKELN UND VERFAHREN ZUM BELEIMEN VON PARTIKELN**
GLUE APPLICATION DEVICE FOR APPLYING GLUE TO PARTICLES AND METHOD FOR APPLYING GLUE TO PARTICLES
DISPOSITIF D'ENCOLLAGE POUR L'ENCOLLAGE DE PARTICULES ET PROCÉDÉ D'ENCOLLAGE DE PARTICULES

(30) Priorität: 22.05.2017 DE 102017111179
(43) Veröffentlichungstag der Anmeldung: 08.04.2020
(73) Patentinhaber: Dieffenbacher GmbH Maschinen- und Anlagenbau, 75031 Eppingen (DE)
(72) Erfinder: ALLEROEDDER, Wolfgang, 75031 Eppingen (DE); SCHUMACHER, Matthias, 75031 Eppingen (DE)
(74) Vertreter: Hartdegen, Helmut
(86) Internationale Anmeldenummer: PCT/EP2018/063413
(87) Internationale Veröffentlichungsnummer: WO 2018/215486

(56) Entgegenhaltungen:
- EP-A2- 0 745 463
- EP-A2- 1 022 103
- DE-B3- 102004 054 162
- DE-B3- 102006 040 044

## Beschreibung

### Technisches Gebiet

Die Erfindung betrifft eine Beleimungseinrichtung zum Beleimen von Partikeln, die zur Herstellung von Pressplatten, insbesondere Werkstoffplatten aus Holz und/oder anderen nachwachsenden Agrarprodukten wie Span-, Faser-, Stroh-, und Schnitzelplatten, sowie Kunststoffplatten, vorgesehen sind, mit einem Zentralkanal zur Führung von Transportluft und Partikeln und mit wenigstens einer Leimdüse zum Beleimen der Partikel.

Des Weiteren betrifft die Erfindung ein Verfahren zum Beleimen von Partikeln, die zur Herstellung von Pressplatten, insbesondere Werkstoffplatten aus Holz und/oder anderen nachwachsenden Agrarprodukten wie Span-, Faser-, Stroh-, und Schnitzelplatten, sowie Kunststoffplatten, vorgesehen sind.

### Stand der Technik

Aus der EP 1 809 454 B1 ist ein Verfahren zur Verhinderung von Verunreinigungen an einer Wandungsinnenseite einer Transporteinrichtung für zur Herstellung von Partikelplatten vorgesehene Fasern bekannt. Die die Fasern werden nach einem Benetzen mit Leim in einer Trockenbeleimungseinheit durch die Transporteinrichtung zu einer weiteren Bearbeitungseinheit mittels Transportluft transportiert. Unmittelbar nach dem Benetzen der Fasern mit Leim besteht eine Kaltklebrigkeit des Leims. Abgetrocknetes Material, welches im Laufe der Weiterverarbeitung der beleimten Fasern gewonnen worden ist und keinen kaltklebrigen Leim mehr aufweist, wird zu dem Strom von noch kaltklebrigen Leim aufweisenden Fasern in der Transporteinrichtung zurückgeführt. Weiterer Stand der Technik findet sich in EP 1 022 103 A, DE 10 2006 040 044 B3 oder EP 0 745 463 A2.

Der Erfindung liegt die Aufgabe zugrunde, eine Beleimungseinrichtung und ein Verfahren zum Beleimen trockener Partikel der eingangs genannten Art zu gestalten, bei denen einfacher und effizienter eine Ablagerung von Leim und/oder Partikeln an Wandungsinnenseiten wenigstens eines Kanals zur Führung von Transportluft und Partikeln verhindert werden kann.

### Offenbarung der Erfindung

Die technische Aufgabe wird bei der Beleimungseinrichtung erfindungsgemäß nach Anspruch 1 gelöst.

In vorteilhafter Weise werden der Transportluft in dem Zentralkanal zunächst von der Seite die zu beleimenden Partikel zugeführt. Anschließend wird Düsenluft durch die Düsenluft-Zufuhrkanäle zugeführt, welche den Bereich der wenigstens einen Leimdüse an- und/oder umströmt. Die wenigstens eine Leimdüse, mit der die Partikel beleimt wer-den, sitzt hinter den Mündungen der Düsenluft-Zufuhrkanäle.

Denn die frisch beleimten Partikel sind zunächst klebrig und können daher, falls keine entsprechenden Vorkehrungen getroffen werden, an den Wandungsinnenseiten des Zentralkanals haften bleiben und dort entsprechende Ablagerungen bilden.

Um dies zu vermeiden werden die beleimten, noch klebrigen Partikel durch Zufuhr von Schutzluft von den entsprechenden Wandungsinnenseiten des Zentralkanals ferngehalten. Durch die besondere Anordnung der wenigstens zwei Schutzluft-Zufuhrkanäle auf gegenüberliegenden Seiten wird erreicht, dass sich ein Schutzmantel aus Luft um den Strom mit Transportluft und beleimten, noch klebrigen Partikeln bildet, welcher verhindert, dass Leim oder beleimte Partikeln an der Wandungsinnenseite sich ablagern und dort entsprechende Verunreinigungen bilden.

Vorteilhafte Weiterbildungen der Erfindung ergeben sich aus den abhängigen Ansprüchen 2 bis 14.

Durch die erfindungsgemäße Anordnung können die beleimten Partikeln mithilfe der Ummantelung mit Schutzluft zu den Wandungsinnenseiten beabstandet in dem Zentralkanal und einem folgenden Förderkanal geführt werden.

Durch die erfindungsgemäße Anordnung der Zufuhrkanäle auf gegenüberliegenden Seiten des Zentralkanals wird erreicht, dass sich ein im Wesentlichen zentraler Partikelstrom in Form eines dichten "Partikelteppichs" in dem Zentralkanal bildet.

Vorteilhafterweise kann es sich bei den Partikeln um trockene, insbesondere getrocknete, Partikel handeln. Trockene Partikel können besser beleimt werden.

Vorteilhafterweise kann es sich bei den Partikeln um Fasern handeln. Mit Fasern kann durch entsprechendes Verleimen ein stabiler Verbund realisiert werden. Die Fasern können vorteilhafterweise getrocknet sein, sodass sie besser beleimt werden können. Die Fasern können von einem sogenannten Refiner bereitgestellt, getrocknet, vorgesichtet und der Beleimungseinrichtung zugeführt werden. Bei den Fasern kann es sich vorteilhafterweise um sogenannte mitteldicke Fasern (MDF) handeln. Mitteldicke Fasern haben in der Regel etwa eine Länge in der Größenordnung von etwa 2 mm und 5 mm, insbesondere etwa 3 mm, und eine Dicke in der Größenordnung von zwischen etwa 0,02 mm und 0,08 mm. Derartige Fasern können zur Herstellung von sogenannten MDF-Platten oder HDF-Platten eingesetzt werden.

Mit der wenigstens einen Leimdüse kann entsprechender Leim oder Leimflotte im Zentralkanal insbesondere durch sprühen verteilt werden.

Vorteilhafterweise kann die Transportluft, die Düsenluft und/oder die Schutzluft in Form von Druckluft zugeführt werden. Auf diese Weise kann eine entsprechende Beschleunigung der Strömung erreicht werden.

Vorteilhafterweise kann die Transportluft auch zur Trocknung der beleimten Partikel dienen, daher kann sie auch als Trocknungsluft bezeichnet werden. Die Transportluft kann auch als Zentralluft bezeichnet werden, da sie zentral dem Zentralkanal zugeführt und geleitet wird.

Die Düsenluft kann auch als Spülluft bezeichnet werden, da sie zum An- und/oder Umspülen der der wenigstens einen Leimdüse dient, um einen entsprechenden Abstand der Partikel sicherzustellen und zu verhindern, dass sich Partikel an der wenigstens einen Leimdüse festsetzen und deren Funktion beeinträchtigen. Außerdem werden mit der Düsenluft unkontrollierte Verwirbelungen an der wenigstens einen Leimdüse vermieden.

Die Schutzluft kann auch als Stützluft bezeichnet werden, da sie den Strom an beleimten Partikeln zu den Wandungsinnenseiten hin stützt. Die Schutzluft bewirkt, dass die frisch beleimten Partikel oder freies Bindemittel, insbesondere Leim, nicht an die Wandungsinnenseiten gelangt.

Vorteilhafterweise können mehrere Leimdüsen, insbesondere in Form von Düsenreihen oder Düsenbalken, vorgesehen sein. Vorteilhafterweise kann wenigstens eine Düsenreihe oder ein Düsenbalken senkrecht zur Zentralströmungsrichtung, insbesondere parallel zur Zentralkanal-Mittelebene, angeordnet sein. Vorteilhafterweise kann wenigstens eine Leimdüse lösbar oder von der Beleimungseinrichtung trennbar angeordnet sein. Auf diese Weise kann sie zu Wartungszwecken, insbesondere zur Reinigung, entfernt werden.

Vorteilhafterweise kann Transportluft mit einer Temperatur von etwa 80 °C zugeführt werden. Auf diese Weise kann die Transportluft zusätzlich als Trockenluft zum Trocknen der beleimten Partikel verwendet werden.

Vorteilhafterweise können dem Zentralkanal etwa 51.000 m³ Transportluft pro Stunde zugeführt werden. Auf diese Weise kann eine entsprechend große Menge an beleimten Partikeln gefördert werden.

Die Zentralströmungsrichtung der Transportluft im Zentralkanal gibt die Hauptrichtung an, in der sich die Transportluft und die Partikel in ihrer Gesamtheit bewegen. Sie kann axial zu einer gedachten Mittellängsachse des Zentralkanals verlaufen.

Vorteilhafterweise können jedem Partikel-Zufuhrkanal etwa 30 t(atro) Partikel pro Stunde zugeführt werden. Die Partikel können mit Partikelzufuhrluft befördert werden. Vorteilhafterweise können jedem Partikel-Zufuhrkanal etwa 10.500 m³ Partikelzufuhrluft pro Stunde zugeführt werden. Die Partikelzufuhrluft kann vorteilhafterweise eine Temperatur von 50 °C aufweisen. So kann die Partikelzufuhrluft zusätzlich zum Trocknen der beleimten Partikel beitragen.

Vorteilhafterweise können jedem Düsenluft-Zufuhrkanal etwa 14.250 m³ Düsenluft pro Stunde zugeführt werden. Die Düsenluft kann vorteilhafterweise eine Temperatur von 50 °C aufweisen, sodass sie zum Trocknen der beleimten Partikel beitragen kann.

Vorteilhafterweise können jedem Schutzluft-Zufuhrkanal 16.500 m³ Schutzluft pro Stunde zugeführt werden. Die Schutzluft kann eine Temperatur von 50 °C aufweisen.

Der Begriff "Luft" im Sinne der Erfindung bezieht sich außer auf Raumluft, Abluft oder dergleichen auch auf andersartige Gase, welche zur Verwendung insbesondere als Transportluft, Schutzluft, Düsenluft oder dergleichen in der Vorrichtung zur Bereitstellung von beleimten Partikeln, insbesondere der Beleimungseinrichtung, geeignet sind.

Bei einer vorteilhaften Ausführungsform kann wenigstens ein Zufuhrkanal wenigstens im Bereich seiner Mündung in den Zentralkanal parallel oder leicht schräg zur Zentralströmungsrichtung verlaufen. Auf diese Weise kann das mittels dem wenigstens einen Zufuhrkanal, insbesondere dem wenigstens einen Partikel-Zufuhrkanal, dem wenigstens einen Düsenluft-Zufuhrkanal oder den wenigstens einen Schutzluft-Zufuhrkanal, eingebrachte Medium, insbesondere Partikel, Düsenluft oder Schutzluft, im Wesentlichen parallel zur Zentralströmungsrichtung, also in Strömungsrichtung der Transportluft, durch den Zentralkanal in den Zentralkanal eingebracht werden. Dadurch können Turbulenzen vermieden werden und eine kontrollierte Zuführung der Medien erfolgen.

Bei einer weiteren vorteilhaften Ausführungsform kann der Zentralkanal wenigstens in einem Mündungsbereich, in den die Zufuhrkanäle münden, einen rechteckigen oder quadratischen Querschnitt aufweisen. Auf diese Weise können die Partikel in dem Strom von Transportluft besser in Form eines "Partikelteppichs" gebracht werden. Entsprechend kann der Schutzmantel aus Schutzluft gleichmäßig um den Partikelteppich herum gebildet werden.

Der Mündungsbereich umfasst die Wandungen des Zentralkanals, durch welche die Zufuhrkanäle führen.

Vorteilhafterweise kann die Zentralkanal-Mittelebene parallel zur gegenüberliegenden insbesondere langen Seiten des quadratischen oder rechteckigen Querschnitts des Zentralkanals verlaufen.

Vorteilhafterweise kann der Zentralkanal in Zentralströmungsrichtung betrachtet einen geraden Verlauf haben. Auf diese Weise können die Transportluft und die Partikel auf geradem Wege strömen. Eine Wahrscheinlichkeit, dass die Partikel zu den Wandlungsinnenseiten des Zentralkanals gelangen, kann so verringert werden.

Bei einer weiteren vorteilhaften Ausführungsform kann ein rechteckiger oder quadratischer Querschnitt des Zentralkanals in Zentralströmungsrichtung betrachtet hinter seinem Mündungsbereich, in den die Zufuhrkanäle münden, in einen runden oder ovalen Querschnitt übergehen. In dem Abschnitt des Zentralkanals mit dem runden oder ovalen Querschnitt kann ein Partikelteppich mit beleimten Partikeln besser mit der Transportluft transportiert werden, ohne dass Leim oder beleimte Partikel sich an den Wandungsinnenseiten niederschlagen.

Ein runder oder ovaler Querschnitt hat den Vorteil, dass dort weitere Schutzluftzuführungen, insbesondere Schutzluftdüsen, einfacher angeordnet werden können. Diese weiteren Schutzluftzuführungen können dazu beitragen, dass der Hauptstrom aus Transportluft und beleimten Partikeln möglichst zentral in der Mitte des Querschnitts des Zentralkanals oder eines nachfolgenden Förderkanals gehalten werden kann.

Vorteilhafterweise kann ein Übergangsstück vorgesehen sein, in dem der rechteckige oder quadratische Querschnitt des Zentralkanals auf einen runden oder ovalen, insbesondere rohrförmigen, Querschnitt übergeleitet wird.

Vorteilhafterweise kann in Zentralströmungsrichtung hinter der Beleimungseinrichtung, insbesondere hinter den Schutzluft-Zufuhrkanälen, wenigstens eine weitere Schutzluftzuführung vorgesehen, mit der Schutzluft in einen entsprechenden Förderkanal zur Förderung der beleimten Partikel eingebracht werden kann. Mit der Schutzluft kann ein Schutzluftmantel zwischen dem Partikelstrom und den entsprechenden Wandungsinnenseiten unterstützt werden. Mit der wenigstens einen weiteren Schutzluftzuführung können zwischen etwa 25.000 m³ und 26.000 m³, insbesondere etwa 25.500 m³, Schutzluft pro Stunde eingebracht werden.

Bei einer weiteren vorteilhaften Ausführungsform kann der Zentralkanal in Zentralströmungsrichtung betrachtet hinter einer Mündung wenigstens eines Düsenluft-Zufuhrkanals wenigstens eine Verjüngung aufweisen. Durch die Verjüngung kann erreicht werden, dass die Düsenluft zu der Zentralkanal-Mittelebene hin gelenkt wird. Auf diese Weise werden die mit der Transportluft beförderten Partikel ebenfalls zur Zentralkanal-Mittelebene hin und so weg von der wenigstens einen Leimdüse gelenkt.

Vorteilhafterweise kann die wenigstens eine Verjüngung durch wenigstens einen entsprechenden Knick an der Wandungsinnenseite des Zentralkanals realisiert sein.

Vorteilhafterweise können auf bezüglich der Zentralkanal-Mittelebene gegenüberliegenden Seiten jeweils ein Knick zur Realisierung der wenigstens einen Verjüngung angeordnet sein. Auf diese Weise kann die Düsenluft auf beiden Seiten gleichmäßig zur Zentralkanal-Mittelebene hin gelenkt werden.

Bei einer weiteren vorteilhaften Ausführungsform kann im Bereich wenigstens einer Verjüngung wenigstens eine Leimdüse angeordnet sein. Auf diese Weise kann die wenigstens eine Leimdüse durch die entsprechende Ablenkung der Düsenluft besser frei von Partikeln gehalten werden.

Vorteilhafterweise kann wenigstens eine Leimdüse in Strömungsrichtung betrachtet vor, auf oder nach einem Knick, welcher die Verjüngung wenigstens mit bildet, angeordnet sein. Auf diese Weise kann je nach Austrittsrichtung des Leims aus der wenigstens einen Leimdüse eine geeignete Luftströmung zum Fernhalten der Partikel von der wenigstens einen Leimdüse erreicht werden.

Bei einer weiteren vorteilhaften Ausführungsform kann eine Mündung wenigstens eines Düsenluft-Zufuhrkanals weiter entfernt von der Zentralkanal-Mittelebene angeordnet sein als eine Mündung wenigstens eines Partikel-Zufuhrkanals auf derselben Seite des Zentralkanals und/oder eine Mündung wenigstens eines Schutzluft-Zufuhrkanals kann weiter entfernt von der Zentralkanal-Mittelebene angeordnet sein als eine Mündung wenigstens eines Düsenluft-Zufuhrkanals auf derselben Seite des Zentralkanals. Die Mündung des wenigstens einen Düsenluft-Zufuhrkanals kann bezüglich dem wenigstens einen Partikel-Zufuhrkanal von der Zentralkanal-Mittelebene aus betrachtet nach außen versetzt sein. Alternativ oder zusätzlich kann die Mündung des wenigstens einen Schutzluft-Zufuhrkanals bezüglich dem wenigstens einen Düsenluft-Zufuhrkanal nach außen versetzt sein.

Auf diese Weise können die in Zentralströmungsrichtung nacheinander zugeführten Medien, nämlich die Partikel, die Düsenluft und die Schutzluft, nacheinander von bezüglich der Zentralkanal-Mittelebene von innen nach außen dem Zentralkanal zugeführt werden. Die Partikel, welche als erstes Medium zugeführt werden, können entsprechend zentral, also nahe der Zentralkanal-Mittelebene, strömen. Mit der dann zugeführten Düsenluft können die Partikel weiter im Zentrum des Zentralkanals konzentriert werden. In Zentralströmungsrichtung hinter der wenigstens einen Leimdüse bilden der Strom an Transportluft mit den beleimten Partikeln bereits eine Teppichform. Die dann zugeführte Schutzluft kann von außen einen Schutzluftmantel zwischen dem Partikelstrom und der Wandungsinnenseite bilden.

Die Mündungen der Partikel-Zufuhrkanäle, der Düsenluft-Zufuhrkanäle und der Schutzluft-Zufuhrkanäle auf einer Seite sind gewissermaßen gestuft oder kaskadenartig angeordnet.

Bei einer weiteren vorteilhaften Ausführungsform kann eine durchströmbare Breite wenigstens eines Partikel-Zufuhrkanals wenigstens im Bereich seiner Mündung in Richtung parallel zur Zentralkanal-Mittelebene und quer zur Zentralströmungsrichtung betrachtet kleiner sein als eine entsprechende durchströmbare Breite des Zentralkanals dort. Die Mündung des wenigstens einen Partikel-Zufuhrkanals kann auf diese Weise schmaler sein als der Zentralkanal. Die Partikel können nicht über die gesamte Breite des Innenraums des Zentralkanals einströmen. Auf gegenüberliegenden Stirnseiten des Zentralkanals kann jeweils ein Luftspalt verbleiben, welcher verhindert, dass die Partikel zu den entsprechenden Wandungsinnenseiten des Zentralkanals gelangen.

Bei einer weiteren vorteilhaften Ausführungsform können der Zentralkanal und die Mündungen der Zufuhrkanäle bezüglich der Zentralkanal-Mittelebene symmetrisch sein. Auf diese Weise kann ein entsprechend gleichmäßiger Strom von Transportluft mit Partikeln, insbesondere ein gleichmäßiger Partikelteppich, erzeugt und befördert werden.

Vorteilhafterweise können der Zentralkanal und die Mündungen der Zufuhrkanäle symmetrisch angeordnet und/oder ausgestaltet sein.

Bei einer weiteren vorteilhaften Ausführungsform kann eine Ausdehnung des Zentralkanals senkrecht zur Zentralkanal-Mittelebene in Zentralströmungsrichtung vor einem Mündungsbereich, in den die Zufuhrkanäle münden, kleiner sein als eine entsprechende Ausdehnung des Zentralkanals nach dem Mündungsbereich. Auf diese Weise kann sich ein durchströmbar Querschnitt des Zentralkanals in Zentralströmungsrichtung betrachtet vergrößern. So können die Mündungen der Zufuhrkanäle besser gestuft oder kaskadenartig angeordnet werden.

Vorteilhafterweise kann die Ausdehnung des Zentralkanals senkrecht zur Zentralkanal-Mittelebene vor dem Mündungsbereich etwa zwischen 500 mm und 600 mm, insbesondere 560 mm, betragen.

Vorteilhafterweise kann die Ausdehnung des Zentralkanals senkrecht zur Zentralkanal-Mittelebene nach dem Mündungsbereich etwa zwischen 600 mm und 700 mm, insbesondere etwa 660 mm, betragen.

Vorteilhafterweise kann sich der Zentralkanal, insbesondere ein Übergangsstück, insbesondere hinter wenigstens einer Venturi-Kehle auf einen Durchmesser von zwischen etwa 1,7 m und 1,9 m, insbesondere 1,8 m, aufweiten.

Bei einer weiteren vorteilhaften Ausführungsform kann in Zentralströmungsrichtung betrachtet hinter den Mündungen der Schutzluft-Zufuhrkanäle wenigstens eine Venturi-Kehle angeordnet sein. In der Venturi-Kehle kann eine Relativgeschwindigkeit zwischen den Partikeln und freien Leimtropfen erzeugt werden. Dadurch kann eine Kollisionswahrscheinlichkeit erhöht werden. Auf diese Weise können freie Leimtropfen mit den Partikeln vereint werden.

Mittels der Düsenluft und der Schutzluft kann eine Wahrscheinlichkeit verringert werden, dass sich Leimtropfen auf der Einschnürseite der Venturi-Kehle absetzen.

Vorteilhafterweise kann wenigstens eine Venturi-Kehle als beidseitige Verjüngung des Zentralkanals senkrecht zur Zentralkanal-Mittelebene ausgestaltet sein. Auf diese Weise kann die Venturi-Kehle in lediglich einer Raumrichtung, nämlich senkrecht zur Zentralkanal-Mittelebene, realisiert werden.

Vorteilhafterweise kann wenigstens eine Venturi-Kehle in einem Abschnitt, insbesondere einem Übergangsstück, des Zentralkanals angeordnet sein, der einen rechteckigen oder quadratischen Querschnitt aufweist. So kann dort eine Teppichform des Stroms der beleimten Partikeln unterstützt werden.

Vorteilhafterweise kann sich der Zentralkanal in Zentralströmungsrichtung betrachtet hinter der wenigstens einen Venturi-Kehle zumindest in Richtung senkrecht zur Zentralkanal-Mittelebene aufweiten. Auf diese Weise kann in dem aufgeweiteten Teil ein Diffusor realisiert werden.

Bei einer weiteren vorteilhaften Ausführungsform kann der Zentralkanal räumlich so angeordnet sein, dass die Zentralströmungsrichtung von räumlich unten nach räumlich oben, insbesondere vertikal, gerichtet ist. Auf diese Weise kann mithilfe der Schwerkraft in Verbindung mit den entsprechenden Luft- und Partikelströmungen im Zentralkanal eine Führung der beleimten Partikeln beabstandet zu den Wandungsinnenseiten des Zentralkanals verbessert werden.

Bei einer weiteren vorteilhaften Ausführungsform kann wenigstens ein Zufuhrkanal vor seiner Mündung in den Zentralkanal wenigstens eine Biegung weg von der Zentralkanal-Mittelebene aufweisen, wobei eine gedachte Biegeachse parallel zur Zentralkanal-Mittelebene und senkrecht zu einer Parallelen zur Zentralströmungsrichtung verlaufen kann. In der Biegung kann das entsprechende Medium, insbesondere die Partikel, die Düsenluft oder die Schutzluft, aufgrund der Zentrifugalkraft nach radial außen zur entsprechend radial äußeren Innenwand des entsprechenden Zulaufkanals wandern und dort entlang geführt werden. Das entsprechende Medium kann auf diese Weise konzentrierter dem Zentralkanal zugeführt werden.

Vorteilhafterweise kann wenigstens ein Partikel-Zufuhrkanal einen Biegungswinkel zwischen etwa 70° und 100°, insbesondere etwa 90°, aufweisen. Auf diese Weise können die Partikel auf der Einlassseite des Partikel-Zufuhrkanals etwa senkrecht zur Zentralkanal-Mittelebene zugeführt und um 90° so umgelenkt werden, dass sie im Bereich der Mündung in den Zentralkanal etwa parallel zur Zentralströmungsrichtung der dortigen Transportluft strömen können.

Alternativ oder zusätzlich kann vorteilhafterweise wenigstens ein Düsenluft-Zufuhrkanal und/oder wenigstens ein Schutzluft-Zufuhrkanal einen Biegungswinkel zwischen etwa 20° und 40°, insbesondere um etwa 30°, aufweisen. Auf diese Weise kann das entsprechende Medium, insbesondere die Düsenluft oder die Schutzluft, auf der jeweiligen Einlassseite des Zufuhrkanals zunächst unter einem Winkel schräg entgegen der Zentralströmungsrichtung der Transportrichtung in dem entsprechenden Zufuhrkanal strömen. In der Biegung kann das Medium so umgelenkt werden, dass es im Wesentlichen parallel zur Zentralströmungsrichtung in den Zentralkanal einströmen kann.

Vorteilhafterweise kann ein Biegeradius wenigstens eines Düsenluft-Zufuhrkanals etwa zwischen 190 mm und 210 mm, insbesondere 200 mm, betragen. Vorteilhafterweise kann ein Biegeradius wenigstens eines Schutzluft-Zufuhrkanals etwa zwischen 90 mm und 110 mm, insbesondere etwa 100 mm, betragen.

Bei einer weiteren vorteilhaften Ausführungsform kann wenigstens ein Zufuhrkanal wenigstens im Bereich seiner Mündung in den Zentralkanal einen quadratischen oder rechteckigen Querschnitt aufweisen. Auf diese Weise kann das entsprechende Medium, insbesondere Partikel, Düsenluft oder Schutzluft, in quadratischer oder rechteckiger Form dem Zentralkanal zugeführt werden. Bei einem rechteckigen Querschnitt kann das entsprechende Medium etwa in Form einer Schicht oder eines Teppichs zugeführt werden.

Vorteilhafterweise kann eine Höhe wenigstens eines Zufuhrkanals im Bereich seiner Mündung in den Zentralkanal kleiner sein als in einem Bereich vor der Mündung, insbesondere in einem Bereich vor einer etwaigen Biegung. Auf diese Weise kann sich der wenigstens eine Zufuhrkanal in Strömungsrichtung des Mediums zu seiner Mündung hin verjüngen. So kann eine entsprechende Strömungsgeschwindigkeit zur Mündung hin vergrößert werden. Die Höhe des wenigstens einen Zufuhrkanals entspricht seiner Innenausdehnung in einer Ebene senkrecht zur Zentralkanal-Mittelebene.

Vorteilhafterweise kann die Höhe des wenigstens einen Partikel-Zufuhrkanals im Bereich seiner Mündung etwa zwischen 40 mm und 70 mm, insbesondere etwa 60 mm, betragen. Vorteilhafterweise kann die Höhe wenigstens eines Partikel-Zufuhrkanals vor der Biegung etwa zwischen 70 mm und 90 mm, insbesondere etwa 80 mm, betragen.

Vorteilhafterweise kann die Höhe wenigstens eines Düsenluft-Zufuhrkanals im Bereich seiner Mündung etwa zwischen 40 mm und 70 mm, insbesondere etwa 60 mm, betragen. Vorteilhafterweise kann eine Höhe wenigstens eines Düsenluft-Zufuhrkanals vor seiner Biegung etwa zwischen 90 mm und 110 mm, insbesondere etwa 100 mm, betragen.

Vorteilhafterweise kann die Höhe wenigstens eines Schutzluft-Zufuhrkanals im Bereich seiner Mündung etwa zwischen 40 mm und 60 mm, insbesondere etwa 50 mm, betragen. Vorteilhafterweise kann die Höhe des wenigstens einen Schutzluft-Zufuhrkanals vor seiner Biegung etwa zwischen 90 mm und 110 mm, insbesondere 100 mm, betragen.

Bei einer weiteren vorteilhaften Ausführungsform kann in wenigstens einem Partikel-Zufuhrkanal und/oder in Partikelströmungsrichtung betrachtet vor wenigstens einem Partikel-Zufuhrkanal wenigstens eine Stachelwalze angeordnet sein. Mit der wenigstens einen Stachelwalze kann das Partikelmaterial, insbesondere Markfasermaterial, oder Partikelklumpen aufgelöst werden. Außerdem kann mit einer Stachelwalze eine Beschleunigung der Partikel unterstützt werden.

Vorteilhafterweise kann wenigstens eine Stachelwalze mit einer hohen Geschwindigkeit angetrieben werden. Die Antriebsgeschwindigkeit kann so gewählt werden, dass die Geschwindigkeit der Stachelwalze an ihrem Umfang größer ist als eine Strömungsgeschwindigkeit der Partikel in dem Partikel-Zufuhrkanal.

Bei einer weiteren vorteilhaften Ausführungsform kann in Zentralströmungsrichtung hinter der Beleimungseinrichtung ein gerader Förderkanal für die Transportluft mit den beleimten Partikeln vorgesehen sein. In dem geraden Förderkanal können die beleimten, noch klebrigen Partikel angetrocknet werden. Dabei kann die Transportluft als Trocknungsluft dienen.

Vorteilhafterweise kann der Förderkanal als sogenannter Trockenturm ausgestaltet sein.

Vorteilhafterweise kann der Förderkanal in Zentralströmungsrichtung betrachtet länger sein als der Zentralkanal der Beleimungseinrichtung. Auf diese Weise kann in dem Förderkanal eine effizientere Antrocknung der beleimten Partikel erfolgen. Vorteilhafterweise kann der gerade Förderkanal mehrere Meter, insbesondere wenigstens etwa 2 m bis 3 m, lang sein.

In Zentralströmungsrichtung hinter den Schutzluft-Zufuhrkanälen, gegebenenfalls hinter der wenigstens einen Venturi-Kehle, können die beleimten Partikel in der Förderkanal gelangen. Dadurch, dass der Förderkanal gerade ist, kann der Strom aus Transportluft und beleimten, noch klebrigen Partikeln einfacher zentral geführt werden. So kann eine Wahrscheinlichkeit, dass die beleimten Partikel mit der Wandungsinnenseite in Kontakt gelangen, verringert werden. Durch das Antrocknen der beleimten Partikel kann eine Wahrscheinlichkeit, dass die beleimten Partikel an einer Wandlungsinnenseite haften bleiben, reduziert werden.

Vorteilhafterweise kann in dem Förderkanal zusätzlich warme Luft eingebracht werden, mit der die beleimten Partikel besser und schneller angetrocknet werden können.

Vorteilhafterweise kann der Förderkanal mittels eines Übergangsstücks mit der Beleimungseinrichtung verbunden sein. In dem Übergangsstück kann eine Anpassung des Querschnitts und der Querschnittsfläche erfolgen. Das Übergangsstück kann vorteilhafterweise Teil des Zentralkanals sein. Auf diese Weise kann der Zentralkanal mit dem Übergangsstück einfach in einem Stück hergestellt werden.

Vorteilhafterweise kann der Zentralkanal einstückig oder mehrstückig mit dem Förderkanal realisiert sein.

Vorteilhafterweise kann bezüglich Zentralströmungsrichtung im Bereich des Anfangs des Förderkanals und/oder in einem weiteren Bereich des Förderkanals wenigstens eine weitere Schutzluftzuführung, insbesondere eine Trockenturm-Schutzluftzuführung, angeordnet sein. Durch die wenigstens eine weitere Schutzluftzuführung kann zusätzliche Schutzluft zugeführt werden. Mit der Schutzluft kann der Schutzluftmantel zwischen dem Partikelstrom und der Wandungsinnenseite des Förderkanals unterstützt werden. Zusätzlich kann die Schutzluft als Trockenluft zum Trocknen der beleimten Partikel dienen.

Vorteilhafterweise kann sich der Förderkanal in Zentralströmungsrichtung betrachtet wenigstens abschnittsweise aufweiten.

Vorteilhafterweise kann der Förderkanal in einem Bereich zwischen zwei weiteren Schutzluftzuführungen einen Innendurchmesser von zwischen etwa 1,8 m und 2,0 m, insbesondere 1,9 m, aufweisen. In Zentralströmungsrichtung nach der zweiten Schutzluftzuführung kann der Förderkanal einen Durchmesser von zwischen etwa 2 m und 2,20 m, insbesondere 2,10 m, aufweisen.

Bei einer weiteren vorteilhaften Ausführungsform kann in Zentralströmungsrichtung betrachtet hinter dem Mündungsbereich des Zentralkanals für die Zufuhrkanäle, insbesondere hinter wenigstens einer Venturi-Kehle und/oder hinter einem Abschnitt mit rundem oder ovalem Querschnitt, ein Bogenkanal angeordnet sein. In dem Bogenkanal kann die Transportluft mit den beleimten Partikeln um umgelenkt werden.

Vorteilhafterweise kann der Bogenkanal einen quadratischen oder rechteckigen Querschnitt aufweisen.

Vorteilhafterweise kann der Bogenkanal im Bereich seines Einlasses und/oder seines Auslasses eine Querschnittsfläche von 1,75 m x 1,75 m aufweisen.

Vorteilhafterweise kann der Bogenkanal gegebenenfalls über den geraden Förderkanal mit dem Zentralkanal verbunden sein. Auf diese Weise können die beleimten Partikel in dem Förderkanal angetrocknet werden, sodass die Wahrscheinlichkeit, dass sie bei der Umlenkung in dem Bogenkanal an dessen Wandlungsinnenseiten haften bleiben, verringert werden kann.

Vorteilhafterweise kann in Strömungsrichtung der Transportluft mit den beleimten Partikeln durch den Bogenkanal vor einer Biegung des Bogenkanals wenigstens ein Schutzpartikel-Zufuhrkanal auf der bezüglich der Biegung radial äußeren Seite in den Bogenkanal münden. Über den Schutzpartikel-Zufuhrkanal können Schutzpartikel insbesondere in Form von bereits getrockneten beleimten Partikeln zugeführt werden. Die Schutzpartikel können die Transportluft mit noch klebrigen beleimten Partikeln von der radial äußeren Wandlungsinnenseite zur Biegung hin führen. Die Schutzpartikel können gewissermaßen eine Art "Schutzkissen" bilden, auf dem die noch klebrigen beleimten Partikel durch die Biegung getragen werden. Auf diese Weise kann vermieden werden, dass die noch klebrigen beleimten Partikel aufgrund der Zentrifugalkraft nach radial außen an die entsprechende radial äußere Wandungsinnenseite des Bogenkanals gelangen und sich dort ablagern können.

Die radial äußere Wand des Bogenkanals kann mit Durchtrittsöffnungen ausgestattet sein, durch die die Bogenschutzluft aus dem Bogenschutzluft-Zufuhrkanal in den Innenraum des Bogenkanals gelangen kann. Die Durchtrittsöffnungen können als Luftspalten realisiert sein.

Vorteilhafterweise kann eine gedachte Achse des Schutzpartikel-Zufuhrkanals parallel zu einer gedachten Achse des Bogenkanals auf dessen Einlassseite gerichtet sein. Dabei kann eine Mündung des Schutzpartikel-Zufuhrkanals in Zentralströmungsrichtung zeigen. Auf diese Weise können die Schutzpartikel in tangentialer Richtung strömend zwischen dem "Teppich" mit den noch klebrigen beleimten Partikeln und der radial äußeren Wandungsinnenseite des Bogenkanals eingebracht werden. Die Schutzpartikel bilden so ein teppichförmiges "Schutzkissen" zwischen den noch klebrigen beleimten Partikeln und der radial äußeren Wandungsinnenseite des Bogenkanals.

Vorteilhafterweise kann in einer Biegung des Bogenkanals wenigstens ein Bogenschutzluft-Zufuhrkanal auf der bezüglich der Biegung äußeren Seite in den Bogenkanal münden. Über den Bogenschutzluft-Zufuhrkanal kann Schutzluft von radial außen in den Bogenkanal geleitet werden. Mit der Bogenschutzluft kann ein entsprechendes Schutzluftkissen realisiert werden, auf welchem die noch klebrigen beleimten Partikel durch den Bogenkanal geführt werden. Mithilfe des Schutzluftkissen kann die Wahrscheinlichkeit, dass Partikel an der radial äußeren Wandlungsinnenseite des Bogenkanals hängen bleiben, weiter verringert werden.

Vorteilhafterweise können etwa zwischen 28.000 m³ und 32.000 m³, insbesondere etwa 30.000 m³, Bogenschutzluft pro Stunde über den wenigstens einen Bogenschutzluft-Zufuhrkanal zugeführt werden.

Vorteilhafterweise kann eine gedachte Achse des wenigstens einen Bogenschutzluft-Zufuhrkanals etwa parallel zu einer gedachten Achse des Bogenkanals auf dessen Auslassseite gerichtet sein. Dabei kann eine Mündung des Bogenschutzluft-Zufuhrkanals zur Auslassseite des Bogenkanals zeigen. Auf diese Weise kann das mit der Bogenschutzluft erzeugte Schutzluftkissen in Richtung der Strömung der Transportluft mit den beleimten Partikeln in dem Bereich des Auslasses des Bogenkanals beschleunigt werden. So können die klebrigen beleimten Partikeln in der Biegung des Bogenkanals radial außen von dem Schutzluftkissen aufgenommen und zur Auslassseite des Bogenkanals befördert werden.

Vorteilhafterweise kann ein Biegungswinkel des Bogenkanals zwischen etwa 80° und 100°, insbesondere etwa 90°, betragen. Auf diese Weise kann die Transportluft mit den beleimten Partikeln bezüglich des Zentralkanals zur Seite hin umgelenkt werden. So kann neben der Beleimungseinrichtung gegebenenfalls mit einem geraden Förderkanal ein weiteres Vorrichtungsteil, insbesondere eine Abscheidevorrichtung für die Transportluft, platzsparend angeordnet werden.

Ferner kann die Vorrichtung wenigstens ein Mittel zur Realisierung eines Schutzluftmantels zwischen einem Strom mit Partikeln und wenigstens einer Wandungsinnenseite des wenigstens einen Kanals aufweist. Mit dem Schutzluftmantel kann eine Wahrscheinlichkeit verringert werden, dass sich Leim und/oder insbesondere beleimte Partikel an der Wandungsinnenseite ablagern.

Bei einer vorteilhaften Ausführungsform kann wenigstens eine erfindungsgemäße Beleimungseinrichtung vorgesehen sein, wobei die Anordnung und Ausgestaltung des Zentralkanals, der Partikel-Zufuhrkanäle, der Düsenluft-Zufuhrkanäle und der Schutzluft-Zufuhrkanäle Mittel zur Realisierung eines Schutzluftmantels wenigstens mit bilden. Auf diese Weise kann im Bereich der Beleimungseinrichtung die Wahrscheinlichkeit von Ablagerungen aus Leim und/oder Partikeln an den Wandungsinnenseiten des Zentralkanals verringert werden.

Bei einer weiteren vorteilhaften Ausführungsform kann wenigstens ein Bogenkanal vorgesehen sein, wobei der wenigstens eine Schutzpartikel-Zufuhrkanal und/oder der wenigstens eine Bogen-Schutzluft-Zufuhrkanal Mittel zur Realisierung eines Schutzluftmantels wenigstens mit bilden. Auf diese Weise kann eine Wahrscheinlichkeit von Ablagerungen aus Leim und/oder Partikeln an Meinungsinnenseiten des Bogenkanals verringert werden.

Bei einer weiteren vorteilhaften Ausführungsform kann wenigstens eine Abscheideeinrichtung wenigstens einen Zyklonabscheider aufweisen. Mit einem Zyklonabscheider kann effizient die Transportluft von den beleimten Partikeln getrennt werden.

Außerdem wird die Aufgabe erfindungsgemäß mit einem Verfahren zum Verhindern von Ablagerungen von Leim und/oder Partikeln nach Anspruch 15 gelöst.

Das Verfahren zum Beleimen trockener Partikeln wird derart umgesetzt, dass
- Transportluft für Partikel einem Zentralkanal zugeführt wird,
- Partikel von bezüglich einer gedachten Zentralkanal-Mittelebene gegenüberliegenden Seiten der Transportluft mittels wenigstens zweier Partikel-Zufuhrkanäle zugeführt werden,
- in Zentralströmungsrichtung der Transportluft betrachtet hinter der Zuführung der Partikel Düsenluft mittels wenigstens zweier Düsenluft-Zufuhrkanäle von bezüglich der Zentralkanal-Mittelebene gegenüberliegenden Seiten der Transportluft und den Partikeln zugeführt werden,
- in Zentralströmungsrichtung hinter der Zuführung der Düsenluft der Transportluft und den Partikeln Leim mittels Leimdüsen zugeführt wird,
- in Zentralströmungsrichtung hinter der Zuführung des Leims von bezüglich der Zentralkanal-Mittelebene gegenüberliegenden Seiten Schutzluft dem Zentralkanal mittels wenigstens zweier Schutzluft-Zufuhrkanäle so zugeführt wird, dass die Schutzluft die Transportluft mit den beleimten Partikeln wenigstens teilweise als Schutzluftmantel umgibt.

Vorteilhafterweise wird der Partikelstrom möglichst zentral in dem Zentralkanal geführt, wobei der Partikelstrom nach dem Beleimen der Partikeln von dem Schutzluftmantel wenigstens teilweise umgeben ist.

Im Übrigen gelten die im Zusammenhang mit der erfindungsgemäßen Beleimungseinrichtung, der erfindungsgemäßen Vorrichtung, dem erfindungsgemäßen Verfahren zur Verhinderung von Ablagerung und dem erfindungsgemäßen Verfahren zum Beleimen von Partikeln und deren jeweiligen vorteilhaften Ausgestaltungen aufgezeigten Merkmale und Vorteile untereinander entsprechend und umgekehrt.

Die folgenden erfinderischen Aspekte finden sich weiterhin in der vorliegenden Ausarbeitung. Insbesondere hat der Bogenkanal erfinderische Vorteile, da es mit ihm möglich ist die Bauhöhe zu verringern und/oder frisch beleimtes Material in einem Förderström umzulenken.

Hierzu weist der Bogenkanal in der Regel einen rechteckigen Querschnitt auf. Weiter findet sich auf einer Seite zu Beginn des Bogens außenseitig eine Zuführung für Schutzfasern, die entlang des größeren Radius sich schützend vor die Wandung legen. Um zu verhindern, dass sich frisch beleimte Fasern durch die Schutzfaser hindurch drücken und an die Wandung des Bogenkanals gelangen, wird über eine am äußeren Radius angebrachte Luftstütze des Bogenkanals gezielt Druckluft in den Bogenkanal eingeblasen. Das hierdurch entstehende Luftpolster sorgt für genügend Abstand zur Wandung des Bogenkanals bis die beleimten Fasern die Kurve hinter sich gebracht haben.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen.

Es zeigen schematisch
- Figur 1: eine Vorrichtung zur Bereitstellung von beleimten Fasern zur Herstellung von Faserplatten;
- Figur 2: einen Ausschnitt der Vorrichtung aus der Figur 1 im Bereich einer Beleimungseinrichtung zum Beleimen der Fasern;
- Figur 3: eine Detailansicht der Beleimungseinrichtung aus der Figur 2;
- Figur 4: einen Querschnitt durch die Beleimungseinrichtung aus der Figur 3 entlang der dortigen Schnittebene IV-IV im Bereich von Faser-Zufuhrkanälen;
- Figur 5: einen Längsschnitt eines unteren Bereichs der Beleimungseinrichtung aus der Figur 3;
- Figur 6: einen Längsschnitt eines Bogenkanals der Vorrichtung aus der Figur 1, welcher sich in Strömungsrichtung stromabwärts der Beleimungseinrichtung befindet.

In den Figuren sind gleiche Bauteile mit gleichen Bezugszeichen versehen.

### Ausführungsform(en) der Erfindung

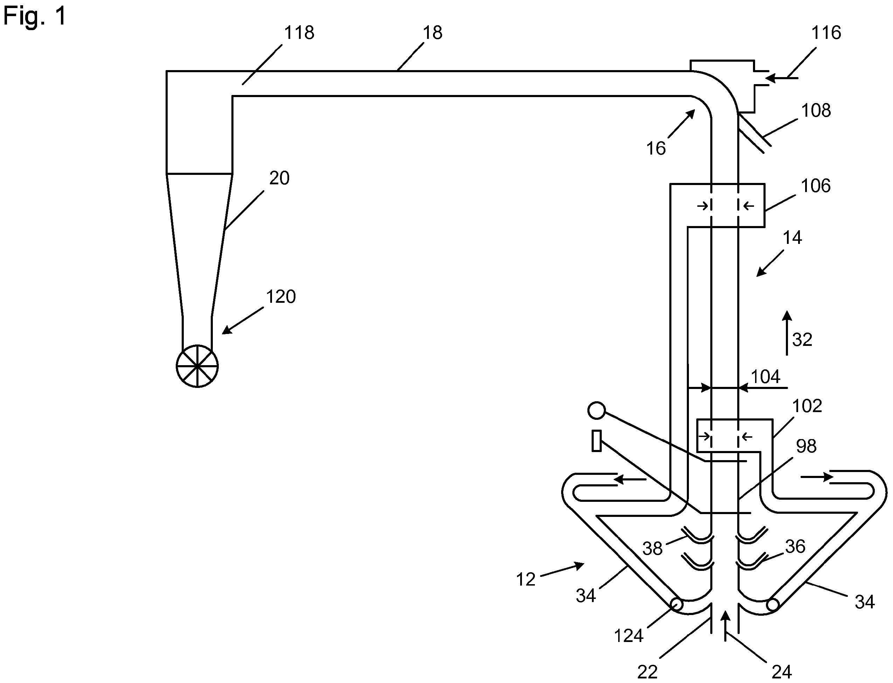

In der Figur 1 ist eine Vorrichtung 10 zur Bereitstellung von beleimten Partikeln in Form von Fasern 26 gezeigt. Die Vorrichtung 10 kann Teil einer ansonsten nicht gezeigten Anlage zur Herstellung von Pressplatten, insbesondere Werkstoffplatten aus Holz und/oder anderen nachwachsenden Agrarprodukten wie Span-, Faser-, Stroh-, und Schnitzelplatten, sowie Kunststoffplatten, sein.

Die Vorrichtung 10 umfasst funktional hintereinander angeordnet eine Beleimungseinrichtung 12, in der Figur 1 unten rechts, darüber einen Trockenturm 14, einen Bogenkanal 16, einen Verbindungskanal 18 und einen Zyklonabscheider 20. Der Zyklonabscheider 20 befindet sich räumlich neben dem der Beleimungseinrichtung 12 und dem Trockenturm 14.

In der Beleimungseinrichtung 12 werden die Fasern 26 mit geeignetem Leim besprüht und dem Trockenturm 14 zugeführt. Das Bezugszeichen der Fasern 26, welche beleimt sind, wird im Folgenden der besseren Unterscheidung wegen mit "B" ergänzt.

In dem Trockenturm 14 werden die klebrigen beleimten Fasern 26B angetrocknet. Mit dem Bogenkanal 16 wird der Faserstrom um 90° umgelenkt und über den Verbindungskanal 18 dem Eingang des Zyklonabscheiders 20 zugeführt. Im Zyklonabscheider 20 wird die Transportluft von den beleimten Fasern 26B getrennt. Die beleimten Fasern 26B zur weiteren Verarbeitung bereitgestellt.

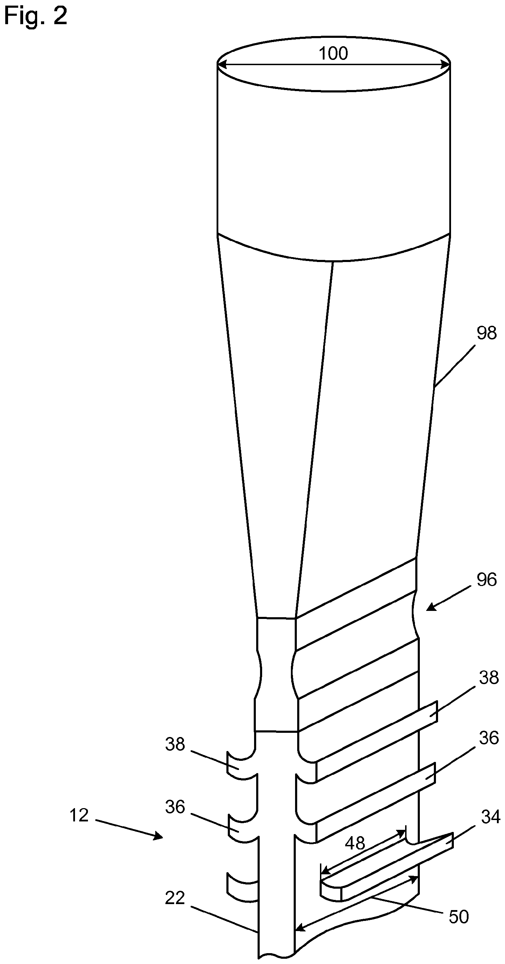

Im Folgenden wird die Beleimungseinrichtung 12 anhand der Figuren 2 bis 5 näher erläutert.

Die Beleimungseinrichtung 12 umfasst einen Zentralkanal 22 zur Führung von Transportluft 24 und Fasern 26. Der Zentralkanal 22 hat einen im Wesentlichen rechteckigen Querschnitt, welcher entlang seiner Länge variiert. Der Zentralkanal 22 weist eine gedachte Zentralkanal-Mittelebene 28 auf, welche sich mittig zwischen den breiten Seiten des rechteckigen Querschnitts des Zentralkanals 22 parallel zu diesen erstreckt. Die Zentralkanal-Mittelebene 28 und damit der Zentralkanal 22 erstreckt sich gerade, beispielhaft vertikal von räumlich unten nach räumlich oben. Ein Einlass 30 des Zentralkanals 22 räumlich unten ist mit einem in den Figuren nicht gezeigten Mittel zur Bereitstellung von Transportluft 24 in Form von Druckluft verbunden.

Auf den breiten Seiten des Zentralkanals 22 führen in Zentralströmungsrichtung 32 der Transportluft 24 in dem Zentralkanal 22 betrachtet hintereinander insgesamt zwei Faser-Zufuhrkanäle 34, zwei Düsenluft-Zufuhrkanäle 36 und zwei Schutzluft-Zufuhrkanäle 38 in den Innenraum des Zentralkanals 22. Die Faser-Zufuhrkanäle 34, die Düsenluft-Zufuhrkanäle 36 und die Schutzluft-Zufuhrkanäle 38 sind jeweils als flache Kanäle mit rechteckigem Querschnitt realisiert. Ihre jeweilige Höhe ist ihre Ausdehnung in Richtung der kurzen Seite des rechteckigen Querschnitts. Die Zentralströmungsrichtung 32 ist beispielhaft vertikal von räumlich unten nach räumlich oben gerichtet.

Der Bereich des Zentralkanals 22, in den die Faser-Zufuhrkanäle 34, Düsenluft-Zufuhrkanäle 36 und die Schutzluft-Zufuhrkanäle 38 münden, wird im Folgenden als Mündungsbereich 40 bezeichnet. Die Ausdehnung 42 des Innenraums des Zentralkanals 22 senkrecht zur Zentralkanal-Mittelebene 28 in Zentralströmungsrichtung 32 vor dem Mündungsbereich 40 ist geringer als die entsprechende Ausdehnung 44 nach dem Mündungsbereich 40. Beispielhaft beträgt die Ausdehnung 42 etwa 560 mm. Die Ausdehnung 44 beträgt etwa 660 mm.

Die beiden Faser-Zufuhrkanäle 34 sind auf bezüglich der Zentralkanal-Mittelebene 28 gegenüber liegenden Seite angeordnet und münden dort jeweils in den Zentralkanal 22. Die Faser-Zufuhrkanäle 34 sind spiegelsymmetrisch bezüglich der Zentralkanal-Mittelebene 28 angeordnet und aufgebaut. Im Bereich ihrer Mündungen 46 verlaufen die Faser-Zufuhrkanäle 34 parallel zur Zentralkanal-Mittelebene 28 und sind in Zentralströmungsrichtung 32 ausgerichtet.

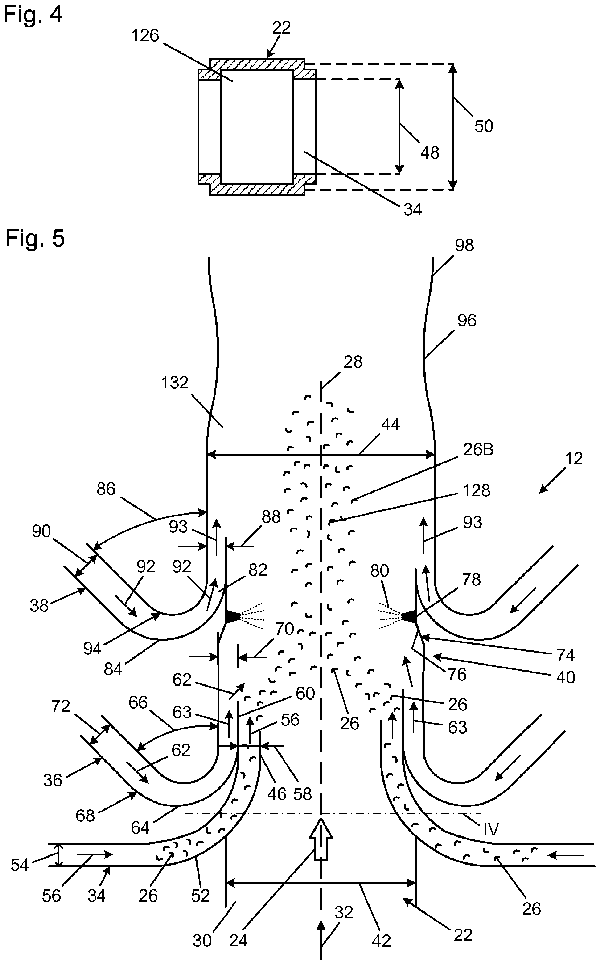

Eine in der Figur 4 bezeichnete Breite 48 der Faser-Zufuhrkanäle 34 parallel zur Zentralkanal-Mittelebene 28 und senkrecht zur Zentralströmungsrichtung 32 ist kleiner als eine entsprechende innere Breite 50 des Zentralkanals 22.

Vor seiner Mündung 46 weist jeder Faser-Zufuhrkanal 34 eine Biegung 52 um beispielhaft 90° von der Zentralkanal-Mittelebene 28 weg auf. Eine Höhe 54 der Faser-Zufuhrkanäle 34 in Strömungsrichtung in 56 der Fasern 26 in den Faser-Zufuhrkanälen 34 vor der jeweiligen Biegung 52 ist größer als eine Höhe 58 im Bereich der jeweiligen Mündung 46. Die Höhe 54 beträgt etwa beispielhaft etwa 80 mm. Die Höhe 58 beträgt beispielhaft etwa 60 mm.

Die Düsenluft-Zufuhrkanäle 36 sind ebenfalls symmetrisch zur Zentralkanal-Mittelebene 28 angeordnet und ausgestaltet. Ihre Mündungen 60 befinden sich auf bezüglich der Zentralkanal-Mittelebene 28 gegenüberliegenden Seiten. Im Bereich ihrer Mündungen 60 erstrecken sich die Düsenluft-Zufuhrkanäle 36 parallel zur Zentralkanal-Mittelebene 28 und sind in Zentralströmungsrichtung 32 ausgerichtet. Die Mündungen 60 der Düsenluft-Zufuhrkanäle 36 erstrecken sich über die gesamte Breite 50 des Zentralkanals 22.

Die Mündungen 60 der Düsenluft-Zufuhrkanäle 36 befinden sich in einem größeren Abstand zu der Zentralkanal-Mittelebene 28 als die Mündungen 46 der Faser-Zufuhrkanäle 34. Sie sind gewissermaßen stufenartig nach außen versetzt.

Die Düsenluft-Zufuhrkanäle 36 weisen jeweils in Strömungsrichtung 62 der Düsenluft (63) in den Düsenluft-Zufuhrkanälen 36 vor den Mündungen 60 eine Biegung 64 um 150° von der Zentralkanal-Mittelebene 28 weg auf. Die Biegungswinkel 66 der Biegungen 64 betragen also 30°. Die Biegungen 64 haben jeweils einen Biegeradius 68 von etwa 200 mm. Eine Höhe 70 der Düsenluft-Zufuhrkanäle 36 im Bereich ihrer jeweiligen Mündung 60 ist kleiner als eine Höhe 72 im Bereich vor der jeweiligen Biegung 64. Die Höhe 70 beträgt etwa 60 mm. Die Höhe 72 beträgt beispielhaft etwa 100 mm.

In Zentralströmungsrichtung 32 hinter den Mündungen 60 der Düsenluft-Zufuhrkanäle 36 weist der Zentralkanal 22 eine Verjüngung 74 seiner Ausdehnung senkrecht zur Zentralkanal-Mittelebene 28 auf. Die Verjüngung 74 ist symmetrisch zur Zentralkanal-Mittelebene 28. Sie wird durch gegenüberliegende Knicke 76 der Innenseite der längeren Wände des Zentralkanals 22 realisiert. Das Maß der Verjüngung 74 ist kleiner als die Höhe 70 der Düsenluft-Zufuhrkanäle 36, sodass die Mündungen 60 in der Projektion in Richtung der Zentralströmungsrichtung 32 betrachtet die jeweiligen Knicke 76 nach innen zu der Zentralkanal-Mittelebene 28 überragen.

Im Bereich der Verjüngung 74 sind mehrere Leimdüsen 78 angeordnet, mit denen Leim 80 in den Zentralkanal 22 gesprüht werden kann.

In Zentralströmungsrichtung 32 hinter den Mündungen 60 der Düsenluft-Zufuhrkanäle 36, der Verjüngung 74 und den Leimdüsen 78 befinden sich die Mündungen 82 der Schutzluft-Zufuhrkanäle 38.

Die Mündungen 82 befinden sich auf bezüglich der Zentralkanal-Mittelebene 28 gegenüberliegenden Seiten. Die Schutzluft-Zufuhrkanäle 38 sind insgesamt symmetrisch zur Zentralkanal-Mittelebene 28 ausgestaltet und angeordnet. Im Bereich der Mündungen 82 sind die Schutzluft-Zufuhrkanäle 38 parallel zur Zentralkanal-Mittelebene 28 und in Zentralströmungsrichtung 32 ausgerichtet. Die Mündungen 82 der Schutzluft-Zufuhrkanäle 38 erstrecken sich über die gesamte Breite 50 des Zentralkanals 22.

Die Schutzluft-Zufuhrkanäle 38 weisen jeweils in Strömungsrichtung 92 der Schutzluft 93 in den Schutzluft-Zufuhrkanälen 38 vor den Mündungen 82 eine Biegung 84 um 150° von der Zentralkanal-Mittelebene 28 weg auf. Die Biegungswinkel 86 der Biegungen 84 betragen also 30°. Die Biegungen 84 haben jeweils einen Biegeradius 94 von etwa 100 mm. Eine Höhe 88 der Schutzluft-Zufuhrkanäle 38 im Bereich der jeweiligen Mündung 82 ist kleiner als eine Höhe 90 in Strömungsrichtung 92 der Schutzluft 93 vor der jeweiligen Biegung 84. Die Höhe 88 beträgt etwa 50 mm. Die Höhe 90 beträgt etwa 100 mm.

Ein Abstand der Mündungen 82 von der Zentralkanal-Mittelebene 28 ist größer als ein entsprechender Abstand der Mündungen 60 der Düsenluft-Zufuhrkanäle 36 zur Zentralkanal-Mittelebene 28 auf derselben Seite. Die Mündungen 82 sind demnach bezüglich der Mündungen 60 nach außen versetzt. Insgesamt sind also auf jeder Seite die Mündung 46 des entsprechenden Faser-Zufuhrkanals 34, die Mündung 60 des entsprechenden Düsenluft-Zufuhrkanals 36 und die Mündung 82 des entsprechenden Schutzluft-Zufuhrkanals 38 stufenartig angeordnet.

Auf jeder Seite bildet die bezüglich der Zentralkanal-Mittelebene 28 äußere Wand des entsprechenden Faser-Zufuhrkanals 34 im Bereich der Mündung 46 jeweils die innere Wand des nachfolgenden Düsenluft-Zufuhrkanals 36 im Bereich der entsprechenden Mündung 60. Die äußere Wand des Düsenluft-Zufuhrkanals 36 im Bereich der Mündung 60 wird durch die äußere Wand des Zentralkanals 22 gebildet. Die bezüglich der Zentralkanal-Mittelebene 28 äußere Wand des Schutzluft-Zufuhrkanals 38 im Bereich der Mündung 82 geht in die äußere Wand des Zentralkanals 22 hinter dem Mündungsbereich 40 über.

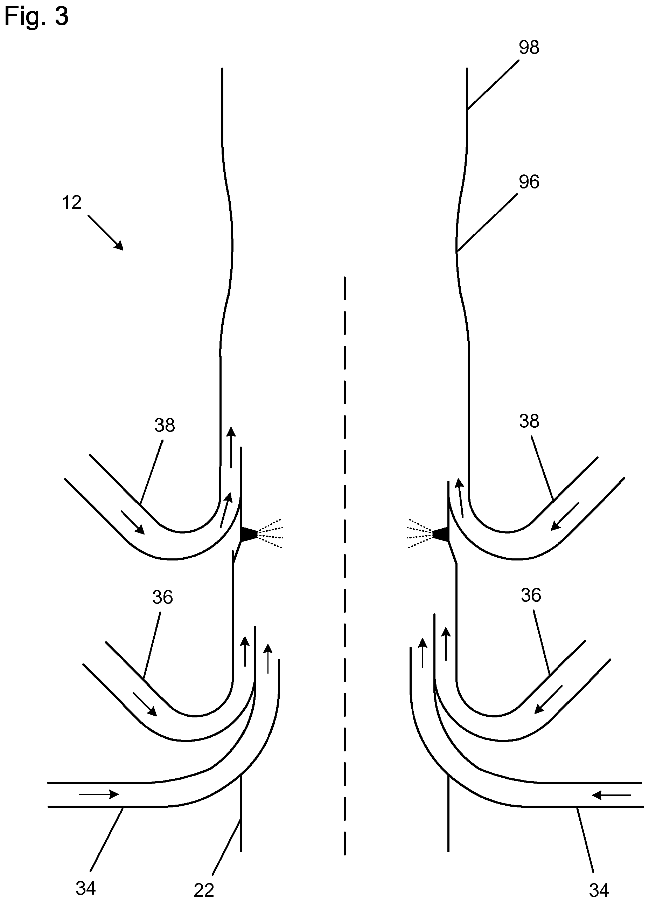

In Strömungsrichtung 32 hinter dem Mündungsbereich 40 geht der Zentralkanal 22 in eine Venturi-Kehle 96 über, die beispielsweise in den Figuren 2 und 3 gezeigt ist. Die Venturi-Kehle 96 ist als Verjüngung senkrecht zur Zentralkanal-Mittelebene 28 ausgestaltet. Die Venturi-Kehle 96 befindet sich in einem Übergangsstück 98 des Zentralkanals 22 mit einem rechteckigen Querschnitt.

In Zentralströmungsrichtung 32 hinter der Venturi-Kehle 96 weitet sich das Übergangsstück 98 des Zentralkanals 22 in Richtung senkrecht zur Zentralkanal-Mittelebene 28 betrachtet auf. Der aufgeweitete Bereich des Übergangsstücks 98 wirkt so als Diffusor hinter der Venturi-Kehle 96.

In dem Übergangsstück 98 geht in Zentralströmungsrichtung 32 betrachtet hinter der Venturi-Kehle 96 der rechteckige Querschnitt in einen runden Querschnitt über. Dies ist in den Figuren 1 und 2 gezeigt.

An das Übergangsstück 98 schließt sich der Trockenturm 14 an. Der Trockenturm 14 bildet einen geraden Förderkanal mit einem rundem Querschnitt. Ein Innendurchmesser 100 des Trockenturms 14 im Bereich seiner dem Übergangsstück 98 zugewandten Eingangsseite beträgt etwa 1,8 m.

Im Bereich des Übergangs zwischen dem Übergangsstück 98 und der Einlassseite des Trockenturms 14 befindet sich eine erste Trockenturm-Schutzluft-Zuführung 102. In Zentralströmungsrichtung 32 betrachtet hinter der ersten Trockenturm-Schutzluft-Zuführung 102 weist der Trockenturm 14 einen Innendurchmesser 104 von 1,9 m auf.

Auf etwa 2/3 der Länge des Trockenturms 14 ist eine zweite Trockenturm-Schutzluft-Zuführung 106 angeordnet.

Stromabwärts des Trockenturms 14 schließt sich der Bogenkanal 16 an. Der Bogenkanal 16 befindet sich räumlich oberhalb des Trockenturms 14.

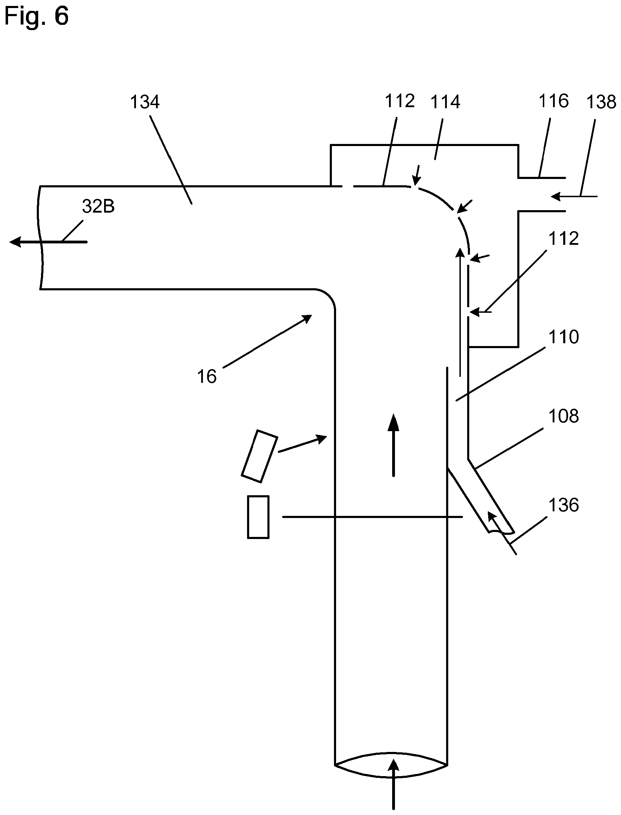

Der Bogenkanal 16 wird im Folgenden anhand der Figur 6 näher erläutert.

Der Bogenkanal 16 weist einen quadratischen Querschnitt auf. Der runde Querschnitt des Trockenturms 14 geht gleichmäßig in den rechteckigen Querschnitt des Bogenkanals 16 über. Zwei Seiten des Bogenkanals 16 auf seiner Einlassseite verlaufen parallel zur Zentralkanal-Mittelebene 28. Der Bogenkanal 16 weist eine Biegung um 90° um eine gedachte Biegungsachse auf. Die gedachte Biegeachse erstreckt sich parallel zu der Zentralkanal-Mittelebene 28 und senkrecht zu einer Parallelen zur Zentralströmungsrichtung 32.

Auf seiner Auslassseite geht der Bogenkanal 16 in den Verbindungskanal 18 über.

In Zentralströmungsrichtung 32 unmittelbar vor der Biegung des Bogenkanals 16 mündet ein Schutzfaser-Zufuhrkanal 108 in den Bogenkanal 16. Im Bereich seiner Mündung 110 erstreckt sich der Schutzfaser-Zufuhrkanal 108 an der bezüglich der Biegung radial äußeren Seite des Bogenkanals 16 etwa parallel zur Zentralströmungsrichtung 32. Die Mündung 110 ist in Zentralströmungsrichtung 32 gerichtet.

In der radial äußeren Wand der Biegung des Bogenkanals 16 befindet sich eine Mehrzahl von Luftschlitzen 112. Der Bereich der Biegung mit den Luftschlitzen 112 ist radial außen von einer Bogen-Schutzluft-Zufuhrkammer 114 umgeben. In die Bogen-Schutzluft-Zufuhrkammer 114 mündet ein Bogen-Schutzluft-Zufuhrkanal 116. Eine gedachte Achse des Bogen-Schutzluft-Zufuhrkanals 116 verläuft parallel zur Zentralströmungsrichtung auf der Auslassseite des Bogenkanals 16. Die Zentralströmungsrichtung ist auf der Auslassseite des Bogenkanals 16 mit "32B" bezeichnet.

Der Verbindungskanal 18 mündet in einen Einlass 118 des Zyklonabscheiders 20. Der Zyklonabscheider 20 ist räumlich vertikal angeordnet. An seiner räumlich unteren Seite weist er einen Auslass 120 für beleimte Fasern 26B auf.

Ein Verfahren zur Bereitstellung von beleimten Fasern 26B wird im Folgenden näher beschrieben. Das Verfahren beginnt mit einem Verfahren zum Beleimen der vorgetreten Fasern 26.

Dem Einlass 30 des Zentralkanals 22 wird von unten Transportluft 24 in Form von Druckluft mit einer Temperatur von 80 °C und einer Menge von 51.000 m³ pro Stunde in Zentralströmungsrichtung 32 zugeführt.

Mithilfe von Fasertransportluft in Form von Druckluft mit einer Temperatur von etwa 50 °C werden getrocknete Fasern 46 über entsprechende, in der Figur 1 gezeigte, Faserzuleitungen 122 den jeweiligen Faser-Zufuhrkanälen 34 zugeführt. Die Faserzuleitungen 122 kommen von einem hier nicht weiter interessierenden Refiner, welcher die vorgetrockneten Fasern 26 bereitstellt. Jedem Faser-Zufuhrkanal 34 werden etwa 10.500 m³ Fasertransportluft pro Stunde und 30 t (atro) Fasern 26 pro Stunde zugeführt

Die zugeführten Fasern 26 werden an schnell drehenden Stachelwalzen 124 vorbeigeführt, welche sich jeweils in einem der Faserzuleitungen 122 unmittelbar vor der Einlassseite des jeweiligen Faser-Zufuhrkanals 34 befinden. Mit den Stachelwalzen 124 werden die zugeführten Fasern 26 aufgelöst und beschleunigt.

Die Fasern 26 werden durch die Mündungen 46 der Faser-Zufuhrkanäle 34 dem Zentralkanal 22 in der Nähe der entsprechenden Wandungsinnenseite zugeführt. Auf diese Weise werden im Bereich der Mündungen 46 zwei Faserteppiche 128A realisiert. Dadurch, dass die Breite 48 der Faser-Zufuhrkanäle 34 geringer ist als die entsprechende Breite des Zentralkanals 24, verbleibt zwischen den Faserteppichen 128A und den Stirnseiten des Zentralkanals 22 jeweils ein Luftspalt 126.

Die Luftspalte 126 sind beispielsweise in der Figur 4 gezeigt.

Es hat sich gezeigt, dass in einem ersten Strömungsprofil zwischen den Faserteppichen 128A und den Wandungsinnenseiten des Zentralkanals 22 ein Schutzluftmantel 132 ausgebildet ist, welcher verhindert, dass die Fasern 26 sich an den Wandungsinnenseiten des Zentralkanals 22 ablagern können.

Den Düsenluft-Zufuhrkanälen 36 wird jeweils Düsenluft 63 in Form von Druckluft mit einer Temperatur von 50 °C und einer Menge von 14.250 m³ pro Stunde zugeführt. Die Düsenluft 63 strömt etwa parallel zur Zentralströmungsrichtung 32 und zur Zentralkanal-Mittelebene 28 in den Zentralkanal 22 in den Bereich zwischen die Faserteppiche 128A und den entsprechenden Wandungsinnenseiten. Auf diese Weise sorgt die Düsenluft 63 dafür, dass die Fasern 26 in jeweiligen Abständen an den Leimdüsen 78 vorbei gelenkt werden.

Die Verjüngung 74 im Zentralkanal 22 bewirkt außerdem, dass die beiden Faserteppiche 128A zu einem Faserteppich zusammengeführt werden, der im Folgenden mit dem Bezugszeichen 128 bezeichnet wird.

Mit den Leimdüsen 78 wird mit Leim eingesprüht, mit dem die Fasern 26 beleimt werden.

Den Schutzluft-Zufuhrkanälen 38 wird jeweils Schutzluft 93 in Form von Druckluft mit einer Temperatur von 50 °C und einer Menge von 16.500 m³ pro Stunde zugeführt. Die Schutzluft 93 strömt etwa parallel zu der Zentralströmungsrichtung 32 und zur Zentralkanal-Mittelebene 28 aus den entsprechenden Mündungen 82. Sie trägt zur Unterstützung des Schutzluftmantels 132 zwischen den entsprechenden Wandungsinnenseiten und dem Faserteppich 128 bei. Der Faserteppich 128 ist umfangsmäßig von dem Schutzluftmantel 132 umgeben.

Die noch klebrigen beleimten Fasern 26B gelangen zur Venturi-Kehle 96. Dort wird der Strom aus den beleimten Fasern 26B und der Transportluft 24 beschleunigt. Ferner werden dort die Relativgeschwindigkeiten zwischen den Fasern 26 und freien Leimtropfen erhöht. Dies führt zu einer Erhöhung der Kollisionswahrscheinlichkeit von freien Leimtropfen und Fasern 26B, so dass mehr freie Leimtropfen an den Fasern 26B gebunden werden.

Im Anschluss an die Venturi-Kehle 96 weitet sich der Zentralkanal 22 in dem Übergangsstück 98 auf, sodass dort die Strömungsgeschwindigkeit wieder abnimmt. Die Transportluft 24 mit dem Faserteppich 128 durchströmt den Trockenturm 14 räumlich vertikal von unten nach oben. Über die erste Schutzluft-Zufuhr 102 werden dem Trockenturm 14 etwa 25.500 m³ Schutzluft in Form von warmer Druckluft pro Stunde zugeführt. Mit der Schutzluft wird der Schutzluftmantel 132 weiter unterstützt. In dem Trockenturm 14, welche einen Förderkanal bildet, verhindert der Schutzluftmantel 132, dass sich beleimte Fasern 26B an der Wandungsinnenseite des Förderkanals ablagern können.

In dem Trockenturm 14 werden die beleimten Fasern 26B angetrocknet. Über die zweite Trockenturm-Schutzluft-Zufuhr 106 werden eine erneut etwa 25.500 m³ Schutzluft in Form von Druckluft pro Stunde zugeführt, welche den Schutzluftmantel 132 weiter unterstützt.

Über den Schutzfaser-Zufuhrkanal 108 werden bereits getrocknete, beleimte Schutzfasern 136 dem Bogenkanal 16 zugeführt. Mit den Schutzfasern 136 wird verhindert, dass sich etwa noch klebrige beleimte Fasern 26B beim durchströmen des Bogenkanals 16 an dessen radial äußeren Wandungsinnenseite ablagern. Die Schutzfasern 136 bilden gewissermaßen ein "Schutzfaserkissen", auf dem der Faserteppich 128 um die Biegung des Bogenkanals 16 getragen wird.

Über den Bogen-Schutzluft-Zufuhrkanal 116 werden etwa 30.000 m³ Bogenluft 138 in Form von Druckluft pro Stunde von der Seite her zugeführt. Die Bogenluft einer 38 bildet ein Schutzluftkissen 134, welches verhindert, dass beleimte Fasern 26B aufgrund der Zentrifugalkraft an die radial äußere Wandungsinnenseite des Bogenkanals 16 gelangen können. Auf dem Schutzluftkissen 134 und dem Schutzfaserkissen werden die Fasern 26B zum Auslass des Bogenkanals 16 geführt.

Die beleimten Fasern 26B gelangen über den Verbindungskanal 18 und den Einlass 118 in den Zyklonabscheider 20. Mit dem Zyklonabscheider 20 werden in hier nicht weiter interessierender Weise die Transportluft 24 von den beleimten Fasern 26B getrennt.

Die beleimten Fasern 26B verlassen den Zyklonabscheider 20 über den Auslass 120 und können zur weiteren Verwendung gesammelt oder direkt weitergeleitet werden. 1572

### Bezugszeichenliste P1572WO:

- 10: Vorrichtung zur Bereitstellung von beleimten Fasern
- 12: Beleimungseinrichtung
- 14: Trockenturm
- 16: Bogenkanal
- 18: Verbindungskanal
- 20: Zyklonabscheider
- 22: Zentralkanal
- 24: Transportluft
- 26: Fasern
- 26B: beleimte Fasern
- 28: Zentralkanal-Mittelebene
- 30: Einlass
- 32: Zentralströmungsrichtung
- 32B: Zentralströmungsrichtung
- 34: Faser-Zufuhrkanäle
- 36: Düsenluft-Zufuhrkanäle
- 38: Schutzluft-Zufuhrkanäle
- 40: Mündungsbereich
- 42: Ausdehnung Zentralkanal vor dem Mündungsbereich
- 44: Ausdehnung Zentralkanal nach dem Mündungsbereich
- 46: Mündungen Faser-Zufuhrkanäle
- 48: Breiten Faser-Zufuhrkanäle
- 50: Breite Zentralkanal
- 52: Biegungen Faser-Zufuhrkanäle
- 54: Höhen Faser-Zufuhrkanäle auf den Eingangsseiten
- 56: Strömungsrichtung Fasern
- 58: Höhenfaser-Zufuhrkanäle im Bereich der Mündungen
- 60: Mündungen Düsenluft-Zufuhrkanäle
- 62: Strömungsrichtung Düsenluft
- 63: Düsenluft
- 64: Biegungen Düsenluft-Zufuhrkanäle
- 66: Biegungswinkel Düsenluft-Zufuhrkanäle
- 68: Biegeradius Düsenluft-Zufuhrkanäle
- 70: Höhen Düsenluft-Zufuhrkanäle im Bereich der Mündungen
- 72: Höhen Düsenluft-Zufuhrkanäle auf den Eingangsseiten
- 74: Verjüngung Zentralkanal
- 76: Knicke Zentralkanal
- 78: Leimdüsen
- 80: Leim
- 82: Mündungen Schutzluft-Zufuhrkanäle
- 84: Biegungen Schutzluft-Zufuhrkanäle
- 86: Biegungswinkel Schutzluft-Zufuhrkanäle
- 88: Höhen Schutzluft-Zufuhrkanäle im Bereich der Mündungen
- 90: Höhen Schutzluft-Zufuhrkanäle auf den eingangsseitigen
- 92: Strömungsrichtung Schutzluft
- 93: Schutzluft
- 94: Biegeradius Schutzluft-Zufuhrkanäle
- 96: Venturi-Kehle
- 98: Übergangsstück
- 100: Innendurchmesser Trockenturm
- 102: Erste Trockenturm-Schutzluft-Zuführung
- 104: Erster Innendurchmesser Trockenturm
- 106: Zweite Trockenturm-Schutzluft-Zuführung
- 108: Schutzfaser-Zufuhrkanal des Bogenkanals
- 110: Mündung des Schutzfaser-Zufuhrkanals
- 112: Luftstütze des Bogenkanals
- 114: Bogen-Schutzluft-Zufuhrkammer
- 116: Bogen-Schutzluft-Zufuhrkanal
- 118: Einlass Zyklonabscheider
- 120: Auslass Zyklonabscheider
- 122: Faserzuleitungen
- 124: Stachelwalzen
- 126: Luftspalte
- 128: Faserteppiche
- 132: Schutzluftmantel
- 134: Schutzluftkissen
- 136: Schutzfasern
- 138: Bogenluft

## Patentansprüche

1. Beleimungseinrichtung (12) zum Beleimen von Partikeln (26), die zur Herstellung von Pressplatten, insbesondere Werkstoffplatten aus Holz und/oder anderen nachwachsenden Agrarprodukten wie Span-, Faser-, Stroh-, und Schnitzelplatten, sowie Kunststoffplatten, vorgesehen sind, mit einem Zentralkanal (22) zur Führung von Transportluft (24) und Partikeln (26) und mit wenigstens einer Leimdüse (78) zum Beleimen der Partikel (26)
und mit wenigstens zwei Partikel-Zufuhrkanälen (34) zur Zuführung der Partikel (26), die auf bezüglich einer gedachten Zentralkanal-Mittelebene (28) des Zentralkanals (22) gegenüberliegenden Seiten in den Zentralkanal (22) münden, und wobei wenigstens ein Zufuhrkanal wenigstens im Bereich seiner Mündung in den Zentralkanal (22) parallel oder leicht schräg zur Zentralströmungsrichtung (32) verläuft und der Zentralkanal (22) wenigstens in einem Mündungsbereich (40), in den die Zufuhrkanäle münden, einen rechteckigen oder quadratischen Querschnitt aufweist,
**dadurch gekennzeichnet, dass** die Beleimungseinrichtung (12) aufweist
- wenigstens zwei Düsenluft-Zufuhrkanäle (36) zur Zuführung von Düsenluft (63), die in Zentralströmungsrichtung (32) der Transportluft (24) im Zentralkanal (22) hinter den Partikel-Zufuhrkanälen (34) auf diesen entsprechenden gegenüberliegenden Seiten in den Zentralkanal (22) münden, und
- wenigstens zwei Schutzluft-Zufuhrkanäle (38) zur Zuführung von Schutzluft (93), die in Zentralströmungsrichtung (32) hinter den Düsenluft-Zufuhrkanälen (36) auf diesen entsprechenden gegenüberliegenden Seiten in den Zentralkanal (22) münden,
- wobei in Zentralströmungsrichtung (32) betrachtet hinter den jeweiligen Mündungen (60) der Düsenluft-Zufuhrkanäle (36) und vor den jeweiligen Mündungen (82) der Schutzluft-Zufuhrkanäle (38) wenigstens eine Leimdüse (78) zum Einbringen von Leim (80) in den Zentralkanal (22) angeordnet ist.

2. Beleimungseinrichtung nach Anspruch 1, **dadurch gekennzeichnet, dass** der Zentralkanal (22) in Zentralströmungsrichtung (32) betrachtet hinter einer Mündung (60) wenigstens eines Düsenluft-Zufuhrkanals (36) wenigstens eine Verjüngung (74) aufweist.

3. Beleimungseinrichtung nach Anspruch 2, **dadurch gekennzeichnet, dass** im Bereich wenigstens einer Verjüngung (74) wenigstens eine Leimdüse (78) angeordnet ist.

4. Beleimungseinrichtung nach einem der vorigen Ansprüche, **dadurch gekennzeichnet, dass** eine Mündung (60) wenigstens eines Düsenluft-Zufuhrkanals (36) weiter entfernt von der Zentralkanal-Mittelebene (28) angeordnet ist als eine Mündung (46) wenigstens eines Partikel-Zufuhrkanals (34) auf derselben Seite des Zentralkanals (22) und/oder eine Mündung (82) wenigstens eines Schutzluft-Zufuhrkanals (38) weiter entfernt von der Zentralkanal-Mittelebene (28) angeordnet ist als eine Mündung (60) wenigstens eines Düsenluft-Zufuhrkanals (36) auf derselben Seite des Zentralkanals (22).

5. Beleimungseinrichtung nach einem der vorigen Ansprüche, **dadurch gekennzeichnet, dass** eine durchströmbare Breite (48) wenigstens eines Partikel-Zufuhrkanals (34) wenigstens im Bereich seiner Mündung (46) in Richtung parallel zur Zentralkanal-Mittelebene (28) und quer zur Zentralströmungsrichtung (32) betrachtet kleiner ist als eine entsprechende durchströmbare Breite (50) des Zentralkanals (22).

6. Beleimungseinrichtung nach einem der vorigen Ansprüche, **dadurch gekennzeichnet, dass** der Zentralkanal (22) und die Mündungen (46, 60, 82) der Zufuhrkanäle (34, 36, 38) bezüglich der Zentralkanal-Mittelebene (28) symmetrisch sind.

7. Beleimungseinrichtung nach einem der vorigen Ansprüche, **dadurch gekennzeichnet, dass** eine Ausdehnung (42) des Zentralkanals (22) senkrecht zur Zentralkanal-Mittelebene (28) in Zentralströmungsrichtung (32) vor einem Mündungsbereich (40), in den die Zufuhrkanäle (34, 36, 38) münden, kleiner ist als eine entsprechende Ausdehnung (44) des Zentralkanals (22) nach dem Mündungsbereich (40).

8. Beleimungseinrichtung nach einem der vorigen Ansprüche, **dadurch gekennzeichnet, dass** in Zentralströmungsrichtung (32) betrachtet hinter den Mündungen (82) der Schutzluft-Zufuhrkanäle (38) wenigstens eine Venturi-Kehle (96) angeordnet ist.

9. Beleimungseinrichtung nach einem der vorigen Ansprüche, **dadurch gekennzeichnet, dass** der Zentralkanal (22) räumlich so angeordnet ist, dass die Zentralströmungsrichtung (32) von räumlich unten nach räumlich oben, insbesondere vertikal, gerichtet ist.

10. Beleimungseinrichtung nach einem der vorigen Ansprüche, **dadurch gekennzeichnet, dass** wenigstens ein Zufuhrkanal (34, 36, 38) vor seiner Mündung in den Zentralkanal (22) wenigstens eine Biegung (52, 64, 84) weg von der Zentralkanal-Mittelebene (28) aufweist, wobei eine gedachte Biegeachse parallel zur Zentralkanal-Mittelebene (28) und senkrecht zu einer Parallelen zur Zentralströmungsrichtung (32) verläuft.

11. Beleimungseinrichtung nach einem der vorigen Ansprüche, **dadurch gekennzeichnet, dass** wenigstens ein Zufuhrkanal (34, 36, 38) wenigstens im Bereich seiner Mündung (46, 60, 82) in den Zentralkanal (22) einen quadratischen oder rechteckigen Querschnitt aufweist.

12. Beleimungseinrichtung nach einem der vorigen Ansprüche, **dadurch gekennzeichnet, dass** in wenigstens einem Partikel-Zufuhrkanal (34) und/oder in Partikelströmungsrichtung (56) betrachtet vor wenigstens einem Partikel-Zufuhrkanal (34) wenigstens eine Stachelwalze (124) angeordnet ist.

13. Beleimungseinrichtung nach einem der vorigen Ansprüche, **dadurch gekennzeichnet, dass** in Zentralströmungsrichtung (32) hinter der Beleimungseinrichtung (12) ein gerader Förderkanal (14) für die Transportluft (24) mit den beleimten Partikeln (26B) vorgesehen ist.

14. Beleimungseinrichtung nach einem der vorigen Ansprüche, **dadurch gekennzeichnet, dass** in Zentralströmungsrichtung (32) betrachtet hinter dem Mündungsbereich (40) des Zentralkanals (22) für die Zufuhrkanäle (34, 36, 38), insbesondere hinter wenigstens einer Venturi-Kehle (96) und/oder hinter einem Abschnitt mit rundem oder ovalem Querschnitt, ein Bogenkanal (16) angeordnet ist.

15. Verfahren zum Beleimen von Partikeln (26), die zur Herstellung von Pressplatten, insbesondere Werkstoffplatten aus Holz und/oder anderen nachwachsenden Agrarprodukten wie Span-, Faser-, Stroh-, und Schnitzelplatten, sowie Kunststoffplatten, vorgesehen sind, **wobei**
- Transportluft (24) für Partikel (26) einem Zentralkanal (22) zugeführt wird,
- Partikel (26) von bezüglich einer gedachten Zentralkanal-Mittelebene (28) gegenüberliegenden Seiten der Transportluft (24) mittels wenigstens zweier Partikel-Zufuhrkanäle zugeführt werden,
**dadurch gekennzeichnet, dass**
- in Zentralströmungsrichtung (32) der Transportluft (24) betrachtet hinter der Zuführung der Partikel (26) Düsenluft (63) mittels wenigstens zweier Düsenluft-Zufuhrkanäle (34) von bezüglich der Zentralkanal-Mittelebene (28) gegenüberliegenden Seiten der Transportluft (24) und den Partikeln (26) zugeführt werden,
- in Zentralströmungsrichtung (32) hinter der Zuführung der Düsenluft (63) der Transportluft (24) und den Partikeln (26) Leim (80) mittels Leimdüsen (78) zugeführt wird,
- in Zentralströmungsrichtung (32) hinter der Zuführung des Leims (80) von bezüglich der Zentralkanal-Mittelebene (28) gegenüberliegenden Seiten Schutzluft (93) dem Zentralkanal (24) mittels wenigstens zweier Schutzluft-Zufuhrkanäle (36) so zugeführt wird, dass die Schutzluft (93) die Transportluft (24) mit den beleimten Partikeln (26B) wenigstens teilweise als Schutzluftmantel (132) umgibt.

## Claims

1. Gluing device (12) for gluing particles (26) which are provided for the production of pressed boards, in particular material boards made of wood and/or other renewable agricultural products such as particleboard, fiberboard, strawboard and chipboard, as well as plastic boards, having a central channel (22) for guiding transport air (24) and particles (26) and having at least one glue nozzle (78) for gluing the particles (26)
and having at least two particle feed channels (34) for feeding the particles (26), which open into the central channel (22) on opposite sides with respect to an imaginary central channel center plane (28) of the central channel (22), and wherein at least one feed channel extends parallel or slightly obliquely to the central flow direction (32) at least in the region of its orifice into the central channel (22) and the central channel (22) has a rectangular or square cross-section at least in an orifice region (40) into which the feed channels open,
**characterized in that** the gluing device (12) comprises
at least two nozzle air feed channels (36) for feeding nozzle air (63), which open into the central channel (22) behind the particle feed channels (34) on opposite sides thereof in the central flow direction (32) of the transport air (24) in the central channel (22), and
at least two protective air feed channels (38) for feeding protective air (93), which open into the central channel (22) behind the nozzle air feed channels (36) on opposite sides thereof in the central flow direction (32),
wherein at least one glue nozzle (78) for introducing glue (80) into the central channel (22) is arranged behind the respective orifices (60) of the nozzle air feed channels (36) and upstream of the respective orifices (82) of the protective air feed channels (38), as viewed in the central flow direction (32).

2. Gluing device according to claim 1, **characterized in that** the central channel (22) has at least one taper (74) behind an orifice (60) of at least one nozzle air feed channel (36), as viewed in the central flow direction (32).

3. Gluing device according to claim 2, **characterized in that** at least one glue nozzle (78) is arranged in the region of at least one taper (74).

4. Gluing device according to one of the preceding claims, **characterized in that** an orifice (60) of at least one nozzle air feed channel (36) is arranged further away from the central channel center plane (28) than an orifice (46) of at least one particle feed channel (34) on the same side of the central channel (22) and/or an orifice (82) of at least one protective air feed channel (38) is arranged further away from the central channel center plane (28) than an orifice (60) of at least one nozzle air feed channel (36) on the same side of the central channel (22).

5. Gluing device according to one of the preceding claims, **characterized in that** a flow-through width (48) of at least one particle feed channel (34), at least in the region of its orifice (46), is smaller than a corresponding flow-through width (50) of the central channel (22) when viewed in the direction parallel to the central channel center plane (28) and transversely to the central flow direction (32).

6. Gluing device according to one of the preceding claims, **characterized in that** the central channel (22) and the orifices (46, 60, 82) of the feed channels (34, 36, 38) are symmetrical with respect to the central channel center plane (28).

7. Gluing device according to one of the preceding claims, **characterized in that** an extension (42) of the central channel (22) perpendicular to the central channel center plane (28) in the central flow direction (32) upstream of an orifice region (40) into which the feed channels (34, 36, 38) open is smaller than a corresponding extension (44) of the central channel (22) behind the orifice region (40).

8. Gluing device according to one of the preceding claims, **characterized in that**, as viewed in the central flow direction (32), at least one venturi throat (96) is arranged behind the orifices (82) of the protective air feed channels (38).

9. Gluing device according to one of the preceding claims, **characterized in that** the central channel (22) is arranged spatially in such a way that the central flow direction (32) is directed from spatially below to spatially above, in particular vertically.

10. Gluing device according to one of the preceding claims, **characterized in that** at least one feed channel (34, 36, 38) has at least one bend (52, 64, 84) away from the central channel center plane (28) upstream of its orifice into the central channel (22), wherein an imaginary bending axis extends parallel to the central channel center plane (28) and perpendicular to a parallel to the central flow direction (32).

11. Gluing device according to one of the preceding claims, **characterized in that** at least one feed channel (34, 36, 38) has a square or rectangular cross-section at least in the region of its orifice (46, 60, 82) into the central channel (22).

12. Gluing device according to one of the preceding claims, **characterized in that** at least one spiked roller (124) is arranged in at least one particle feed channel (34) and/or upstream of at least one particle feed channel (34) as viewed in the particle flow direction (56).

13. Gluing device according to one of the preceding claims, **characterized in that** a straight conveying channel (14) for the transport air (24) with the glued particles (26B) is provided behind the gluing device (12) in the central flow direction (32).

14. Gluing device according to one of the preceding claims, **characterized in that**, as viewed in the central flow direction (32), a curved channel (16) is arranged behind the orifice region (40) of the central channel (22) for the feed channels (34, 36, 38), in particular behind at least one venturi throat (96) and/or behind a section with a round or oval cross-section.

15. Method for gluing particles (26) which are intended for the production of pressed boards, in particular material boards made of wood and/or other renewable agricultural products such as particleboard, fiberboard, strawboard and chipboard, as well as plastic boards, wherein
transport air (24) for particles (26) is supplied to a central channel (22),
particles (26) are supplied from opposite sides of the transport air (24) with respect to an imaginary central channel center plane (28) by means of at least two particle feed channels,
**characterized in that**
as viewed in the central flow direction (32) of the transport air (24) behind the supply of the particles (26), nozzle air (63) is supplied by means of at least two nozzle air feed channels (34) from opposite sides of the transport air (24) and the particles (26) with respect to the central channel center plane (28),
glue (80) is supplied to the transport air (24) and the particles (26) behind the supply of nozzle air (63) in the central flow direction (32) by means of glue nozzles (78),
in the central flow direction (32) behind the supply of the glue (80), protective air (93) is supplied to the central channel (24) from sides opposite the central channel center plane (28) by means of at least two protective air feed channels (36) in such a way that the protective air (93) at least partially surrounds the transport air (24) with the glued particles (26B) as a protective air jacket (132).

## Revendications

1. Installation d'encollage (12) pour l'encollage de particules (26) destinées à la fabrication de panneaux agglomérés, en particulier de panneaux de matériaux à base de bois et/ou d'autres produits agricoles renouvelables, tels que des panneaux de particules, de fibres, de paille et de copeaux, ainsi que de panneaux de matière synthétique, munie d'un conduit central (22) pour l'acheminement d'air de transport (24) et de particules (26) et d'au moins une buse d'encollage (78) pour l'encollage des particules (26)
et munie d'au moins deux conduits d'acheminement de particules (34) pour l'acheminement des particules (26), qui débouchent sur des côtés opposés du conduit central (22) par rapport à un plan médian imaginaire de conduit central (28) du conduit central (22), au moins un conduit d'acheminement étant parallèle ou légèrement oblique par rapport au sens de circulation centrale (32) au moins au niveau de son embouchure dans le conduit central (22) et le conduit central (22) présentant, au moins dans une zone d'embouchure (40) dans laquelle débouchent les conduits d'acheminement, une section rectangulaire ou carrée,
**caractérisée en ce que** l'installation d'encollage (12) comporte
- au moins deux conduits d'acheminement d'air de buse (36) pour l'acheminement d'air de bus (63), qui débouchent dans le conduit central (22) en aval des conduits d'acheminement de particules (34) dans le sens de circulation centrale (32) de l'air de transport (24) sur des côtés opposés correspondant à ceux-ci dans le conduit central (22) et
- au moins deux conduits d'acheminement d'air de protection (38) pour l'acheminement d'air de protection (93), qui débouchent dans le conduit central (22) en aval des conduits d'acheminement d'air de buse (36) dans le sens de circulation central (32) sur des côtés opposés correspondant à ceux-ci,
- au moins une buse d'encollage (78) pour l'application de colle étant disposée respectivement dans le conduit central (22) en aval de l'embouchure (60) des conduits d'acheminement d'air de buse (36) et en amont de l'embouchure (82) des conduits d'acheminement d'air de protection (38) dans le sens de circulation centrale (32).

2. Installation d'encollage selon la revendication 1, **caractérisée en ce que** le conduit central (22) présente au moins un resserrement (74) en aval dans le sens de circulation centrale (32) d'une embouchure (60) d'au moins un conduit d'acheminement d'air de buse (36).

3. Installation d'encollage selon la revendication 2, **caractérisée en ce qu'**au moins une buse d'encollage (78) est disposée au niveau de l'au moins un resserrement (74).

4. Installation d'encollage selon l'une des revendications précédentes, **caractérisée en ce qu'**une embouchure (60) d'au moins un conduit d'acheminement d'air de buse (36) est disposée plus loin du plan médian de conduit central (28) qu'une embouchure (46) d'au moins un conduit d'acheminement de particules (34) du même côté du conduit central (22) et/ou une embouchure (82) d'au moins un conduit d'acheminement d'air de protection (38) et disposée plus loin du plan médian de conduit central (28) qu'une embouchure (60) d'au moins un conduit d'acheminement d'air de buse (36) du même côté du conduit central (22).

5. Installation d'encollage selon l'une des revendications précédentes, **caractérisée en ce qu'**une largeur de circulation (48) d'au moins un conduit d'acheminement de particules (34) est plus petite, au moins au niveau de son embouchure (46), vue parallèlement au plan médian de conduit central (28) et transversalement par rapport au sens de circulation centrale (32), qu'une largeur de circulation (50) correspondante du conduit central (22).

6. Installation d'encollage selon l'une des revendications précédentes, **caractérisée en ce que** le conduit central (22) et les embouchures (46, 60, 82) des conduits d'acheminement (34, 36, 38) sont symétriques par rapport au plan médian de conduit central (28).

7. Installation d'encollage selon l'une des revendications précédentes, **caractérisée en ce qu'**une étendue (42) du conduit central (22) perpendiculairement au plan médian de conduit central (28) dans le sens de circulation centrale (32) est plus petite en amont d'une zone d'embouchure (40) dans laquelle débouchent les conduits d'acheminement (34, 36, 38) qu'une étendue (44) correspondante du conduit central (22) en aval de la zone d'embouchure (40).

8. Installation d'encollage selon l'une des revendications précédentes, **caractérisée en ce qu'**au moins un col de Venturi (96) est disposé en aval des embouchures (82) des conduits d'acheminement d'air de protection (38) dans le sens de circulation centrale (32).

9. Installation d'encollage selon l'une des revendications précédentes, **caractérisée en ce que** le conduit central (22) est disposé dans l'espace de telle façon que le sens de circulation centrale (32) est orienté du bas dans l'espace vers le haut dans l'espace, en particulier verticalement.

10. Installation d'encollage selon l'une des revendications précédentes, **caractérisée en ce qu'**au moins un conduit d'acheminement (34, 36, 38) présente, en amont de son embouchure dans le conduit central (22), au moins un courbe (52, 64, 84) qui l'éloigne du plan médian de conduit central (28), un axe imaginaire de courbure étant parallèle au plan médian de conduit central (28) et perpendiculaire à une parallèle au sens de circulation centrale (32).

11. Installation d'encollage selon l'une des revendications précédentes, **caractérisée en ce qu'**au moins un conduit d'acheminement (34, 36, 38) présente, au moins au niveau de son embouchure (46, 60, 82) dans le conduit central (22), une section carrée ou rectangulaire.

12. Installation d'encollage selon l'une des revendications précédentes, **caractérisée en ce qu'**au moins un cylindre à picots (124) est disposé dans au moins un conduit d'acheminement de particules (34) et/ou en amont d'au moins un conduit d'acheminement de particules (34) dans le sens de circulation des particules (56).

13. Installation d'encollage selon l'une des revendications précédentes, **caractérisée en ce qu'**un conduit d'acheminement droit (14) est prévu en aval de l'installation d'encollage (12) dans le sens de circulation centrale (32) pour l'air de transport (24) avec les particules encollées (26B).

14. Installation d'encollage selon l'une des revendications précédentes, **caractérisée en ce qu'**un conduit en arc de cercle (16) est disposé en aval dans le sens de circulation centrale (32) de la zone d'embouchure (40) du conduit central (22) pour les conduits d'acheminement (34, 36, 38), en particulier en aval d'au moins un col de Venturi (96) et/ou en aval d'un tronçon de section ronde ou ovale.

15. Procédé pour l'encollage de particules (26) destinées à la fabrication de panneaux pressés, en particulier de panneaux de matériaux à base de bois et/ou d'autres produits agricoles renouvelables, tels que des panneaux de particules, de fibres, de paille et de copeaux, ainsi que de panneaux de matière synthétique, dans lequel
- l'air de transport (24) pour les particules (26) est amené à un conduit central (22) ;
- des particules (26) sont amenées vers l'air de transport (24) depuis des côtés qui se font face par rapport à un plan médian de conduit central (28) imaginaire au moyen d'au moins deux conduits d'acheminement de particules,
**caractérisé en ce que**
- de l'air de buse (63) est amené vers l'air de transport (24) et les particules (26) en aval de l'arrivée des particules (26) dans le sens de circulation centrale (32) de l'air de transport (24) au moyen d'au moins deux conduits d'acheminement d'air de buse (34) depuis des côtés qui se font face par rapport au plan médian de conduit central (28) ;
- de la colle (80) est amenée dans le sens de circulation centrale (32) vers l'air de transport (24) et les particules (26) en aval de l'arrivée de l'air de buse (63) au moyen de buses d'encollage (78) ;
- de l'air de protection (93) est amené au conduit central (24) en aval de l'arrivée de la colle (80) dans le sens de circulation centrale (32) depuis des côtés qui se font face par rapport au plan médian de conduit central (28) au moyen d'au moins deux conduits d'acheminement d'air de protection (36), de telle manière que l'air de protection (93) entoure au moins partiellement l'air de transport (24) avec les particules encollées (26B) en format une enveloppe d'air de protection (132).
